(19) Europäisches Patentamt

European Patent Office

Office européen des brevets

(11) **EP 1 207 132 A1**

(12) **EUROPEAN PATENT APPLICATION**
published in accordance with Art. 158(3) EPC

(43) Date of publication:
22.05.2002 Bulletin 2002/21

(51) Int Cl.[7]: **C01B 3/02**, C01B 3/50,
C10K 3/00, C10J 3/00,
H01M 8/06, H01M 8/08,
H01M 8/10, H01M 8/04

(21) Application number: 00944370.6

(22) Date of filing: 10.07.2000

(86) International application number:
PCT/JP00/04589

(87) International publication number:
WO 01/04045 (18.01.2001 Gazette 2001/03)

(84) Designated Contracting States:
AT BE CH CY DE DK ES FI FR GB GR IE IT LI LU
MC NL PT SE
Designated Extension States:
AL LT LV MK RO SI

(30) Priority: 09.07.1999 JP 19655499
15.07.1999 JP 20144399

(71) Applicant: EBARA CORPORATION
Ohta-ku, Tokyo 144-8510 (JP)

(72) Inventors:
• SU, Qingquan, Ebara Corporation
Tokyo 144-8510 (JP)

• KINOSHITA, Kazuo, Ebara Corporation
Tokyo 144-8510 (JP)
• OSHITA, Takahiro, Ebara Corporation
Tokyo 144-8510 (JP)
• MIYOSHI, Norihisa, Ebara Corporation
Tokyo 144-8510 (JP)
• NARUSE, Katsutoshi, Ebara Corporation
Tokyo 144-8510 (JP)

(74) Representative: Wagner, Karl H., Dipl.-Ing.
Wagner & Geyer,
Patentanwälte,
Gewürzmühlstrasse 5
80538 München (DE)

(54) **PROCESS AND APPARATUS FOR PRODUCTION OF HYDROGEN BY GASIFICATION OF COMBUSTIBLE MATERIAL AND METHOD FOR ELECTRIC POWER GENERATION USING FUEL CELL AND ELECTRIC POWER GENERATION SYSTEM USING FUEL CELL**

(57) The present invention relates to a hydrogen production method comprising a gasification step (1) for gasifying combustibles (a) and a gas processing step for refining a produced gas (b) to produce hydrogen. The gas processing step comprises a methanation step (5) for reacting carbon dioxide and carbon monoxide in the produced gas (b) obtained in the gasification step (1) with hydrogen to convert carbon dioxide and carbon monoxide into methane, and a hydrogen purifying step (6) for separating methane, nitrogen and argon in the gas after the methanation and purifying hydrogen gas.

FIG. 1

## EP 1 207 132 A1

### Description

### Technical Field

The present invention relates to a technology for recovering chemical energy of combustibles in the form of hydrogen gas and a technology for converting hydrogen gas to electric energy with high efficiency, and more particularly to a system in which combustibles such as combustible wastes or coal are gasified to produce gas and the produced gas is utilized to produce hydrogen gas (or hydrogen-containing gas) and an electric generating system in which the produced hydrogen gas (or hydrogen-containing gas) is supplied to a fuel cell to generate electricity. Here, combustible wastes include municipal wastes, refuse-derived fuel, solid-water mixture, used paper, plastic wastes, waste FRP, biomass wastes, automobile wastes, industrial wastes such as waste wood, low-grade coal, and waste oil.

### Background Art

In recent years, there has been a growing tendency for environmental protection, and various attempts regarding an electric generating system have been made to generate electricity by utilizing combustible wastes as an energy source. One of the attempts is to employ a combined-cycle electric generating system in which combustibles are gasified under pressure to produce gas, the produced gas is used to drive a gas turbine, and heat of the exhaust gas discharged from the gas turbine is recovered by a waste heat boiler to drive a steam turbine, and thus the gas turbine and the steam turbine are used in combination to perform combined-cycle power generation for thereby generating electricity with high efficiency.

However, in the above combined-cycle electric generating system, a low calorific gas is difficult to be utilized, and pollutants such as nitrogen oxide, sulfur oxide and dioxins which have a bad influence on environment are generated because combustion is indispensable, thus causing an increase of environment load.

On the other hand, there has been being developed a fuel cell technology having a high efficiency and low environment load which corresponds to an electric generating system for converting chemical energy of hydrogen to electric energy directly. In order to make the best use of such electric generating technology, it is indispensable to develop a production system of high quality hydrogen gas and to prepare infrastructure related to hydrogen such as hydrogen gas stations. Specifically, it is necessary to supply hydrogen gas having a high concentration which hardly contains gas components such as hydrogen sulfide or carbon monoxide poisonous to a proton exchange membrane fuel cell which is optimum for fuel cell vehicles or household electric generating systems. However, in the present circumstances, natural gas and methanol which can be relatively easily reformed are employed as material of hydrogen.

### Disclosure of Invention

The present invention has been made in view of the above, and it is therefore an object of the present invention to provide a system for producing hydrogen gas which is suitable for a fuel cell, especially a proton exchange membrane fuel cell from gases produced by gasification of combustibles in order to change solid waste incinerating facilities into a hydrogen gas station or a power plant which does not pollute the environment, and to provide a non-incineration power generation system having reduced environment load wherein the produced hydrogen gas is supplied to a fuel cell to generate electricity with high efficiency.

In order to achieve the above object, the inventors of the present application have studied earnestly and found the following, and have made a first aspect of the present invention which relates to a hydrogen production system shown in FIG. 1 for producing high quality hydrogen gas efficiently which is suitable for fuel cell power generation from low quality gas produced by gasification of combustibles, and a fuel cell power generation system shown in FIGS. 2 and 3 which uses the produced hydrogen gas as a fuel.

According to the present invention, there is provided a hydrogen production method by gasification of combustibles, the method comprising a gasification step for gasifying combustibles and a gas processing step for producing hydrogen by refining the gas produced in the gasification step, the gas processing step comprising: a methanation step for reacting carbon dioxide and carbon monoxide in the gas produced in the gasification step with hydrogen to convert carbon dioxide and carbon monoxide into methane.

Specifically, in a hydrogen production system, combustibles are gasified at a high temperature in a gasification step, and the gas produced in the gasification step is brought into contact with water or alkaline solution in a gas scrubbing step to absorb and remove dust and a trace amount of acid gases such as hydrogen chloride and hydrogen sulfide in the gas. Next, the acid gases in the gas after the scrubbing step are further adsorbed and removed in a shift reaction step, and then carbon monoxide in the gas catalytically reacts with steam and is converted carbon monoxide into hydrogen gas and carbon dioxide. Then, in a carbon dioxide chemical absorption step, carbon dioxide in the gas after the shift reaction step is brought into contact with alkaline absorption solution and is absorbed and separated.

Next, in a methanation step, the residual carbon dioxide and carbon monoxide in the gas after the chemical absorption step are catalytically reacted with hydrogen to be converted into methane. In a hydrogen purifying step using a hydrogen-absorbing alloy, water content in the gas after the methanation step is removed, and then methane, nitrogen and argon in the gas after the methanation step are separated out and the hydrogen gas is purified and pressurized. On the other hand, a vent gas discharged from the hydrogen purifying step is led to a methane adsorption step in which methane is adsorbed and recovered. The recovered methane gas is returned to the gasification step where methane is converted by steam reforming reaction into hydrogen and carbon monoxide.

Further, in a fuel cell power generation system, the hydrogen gas produced by the hydrogen production method according to the present invention is supplied as a fuel gas to an anode in a fuel cell to generate electricity, and an anode vent gas is supplied to the anode for circulation and utilization of such vent gas. Further, an oxygen production apparatus is provided to produce enriched oxygen from air, and the enriched oxygen is supplied as an oxidizing agent gas to the cathode of the fuel cell. A cathode vent gas may be fed to the gasification step for use as a gasifying agent and/or a fluidizing gas for combustibles. Furthermore, waste heat recovered by cooling of the fuel cell may be used as a heat source at the time of release of hydrogen in the hydrogen-absorbing alloy. In the present invention, a proton exchange membrane fuel cell or a phosphoric acid fuel cell is suitable as the fuel cell used in the fuel cell power generation step.

The produced gas yielded in the gasification of combustibles varies with the type of combustibles. In general, the produced gas contains several percent to several ten percent of hydrogen and carbon monoxide as fuel components, and several percent to several ten percent of carbon dioxide, nitrogen, argon and steam as non-fuel-gas components, and further contains several ppm to several thousands of ppm of hydrogen sulfide and hydrogen chloride as minor acid gas components.

However, as hydrogen gas supplied to the fuel cell, a high hydrogen concentration, and a carbon monoxide concentration as low as possible are required. Specifically, in the case of a proton exchange membrane fuel cell, it is necessary to lower carbon monoxide concentration to 100 ppm or less, preferably 10 ppm or less, and more preferably 1 ppm or less. Further, because acid gases, especially hydrogen sulfide and hydrogen chloride are poisonous to electrode catalyst of a fuel cell, and various gas absorbent, adsorbent and catalyst in the subsequent steps, it is necessary to remove such acid gases down to 1 ppm or less, preferably 0.1 ppm or less. Further, in order to increase hydrogen concentration, it is necessary to separate carbon dioxide, nitrogen, argon and methane. In the present invention, there is provided a hydrogen purifying step using hydrogen-absorbing alloy to separate these impurity gases. In this case, carbon dioxide and steam besides acid gases and carbon monoxide are poisonous to the hydrogen-absorbing alloy, and hence it is desirable that carbon dioxide and steam are lowered to 100 ppm or less, preferably 10 ppm or less, respectively.

In the conventional hydrogen purifying technology, impurity gases other than hydrogen are generally separated and removed by a single step such as a pressure swing adsorption (PSA) step or a membrane separation step. However, in this case, a high pressure is required and thus consumes large energy, and the recovery rate of hydrogen is low. In the present invention, impurity gases other than hydrogen are divided into four groups, i.e. acid gases, carbon monoxide, carbon dioxide and steam, and nitrogen, argon and methane according to their separation characteristics, and an optimum separation technology is employed according to their separation characteristics and concentration range. Acid gases such as hydrogen sulfide and hydrogen chloride are scrubbed and removed by dissolution of such acid gases into a scrubbing liquid and chemical reaction thereof in a scrubbing step. Further, when the acid gases remain in excess of an allowable concentration, the acid gases can also be removed by adsorption in the preceding stage of a shift reactor as the subsequent step.

With regard to carbon monoxide, a shift reaction step and a methanation step are provided. First, CO catalytically reacts with steam and is converted into hydrogen and carbon dioxide in the shift reaction step, and the residual CO then catalytically reacts with hydrogen and is converted into methane in the methanation step. When the concentration of CO in the produced gas is 1% or less, CO may be removed only by the methanation step without providing the shift reaction step.

With regard to carbon dioxide and steam, there is provided a carbon dioxide chemical absorption step in which carbon dioxide is chemically absorbed by alkaline absorption solution and steam is condensed and removed at the absorption temperature. As a separating method of $CO_2$ gas, there are a membrane separation method, an adsorption method and a chemical absorption method. In the present invention, exhaust heat generated in large quantities in the gasification step or the fuel cell power generation step can be utilized, and absorption can be performed under a low pressure such as a pressure of atmospheric pressure to about 7 atmospheres. Further, the recovery rate of hydrogen is extremely high, acid gases such as hydrogen sulfide and hydrogen chloride can be further absorbed and removed, and $CO_2$ gas separated and recovered has high purity and thus high commercial value. Therefore, it is desirable to use carbon dioxide chemical absorption method. Since the hydrogen purifying step using the hydrogen-absorbing alloy is provided in the subsequent step, in order to prevent the hydrogen-absorbing alloy from being poisoned by carbon monoxide and carbon dioxide, the methanation step is provided to catalytically react both carbon monoxide and carbon dioxide with hydrogen, whereby carbon monoxide and carbon dioxide are converted into a methane gas which is harmless to the hydrogen-absorbing alloy. Water produced by the methanation reaction is removed by a dehumidifier.

With respect to nitrogen, argon and methane, a hydrogen purifying step using hydrogen purifying function of hydrogen-absorbing alloy is provided. Since $N_2$ and Ar are inactive gas, in the case of separating these gases from hydrogen by the adsorption method or the chemical absorption method, the energy efficiency is very low. In the separation method using hydrogen-absorbing alloy, hydrogen is absorbed selectively, and hence the energy efficiency of such separation method is higher than those of the adsorption method and the absorption method, and at the same time the pressure rise of hydrogen can be advantageously performed. In the case of using the purified hydrogen gas as a fuel gas in a fuel cell power generation, the higher a pressure of hydrogen is within the allowable pressure of a cell stack, the higher the power generation efficiency is.

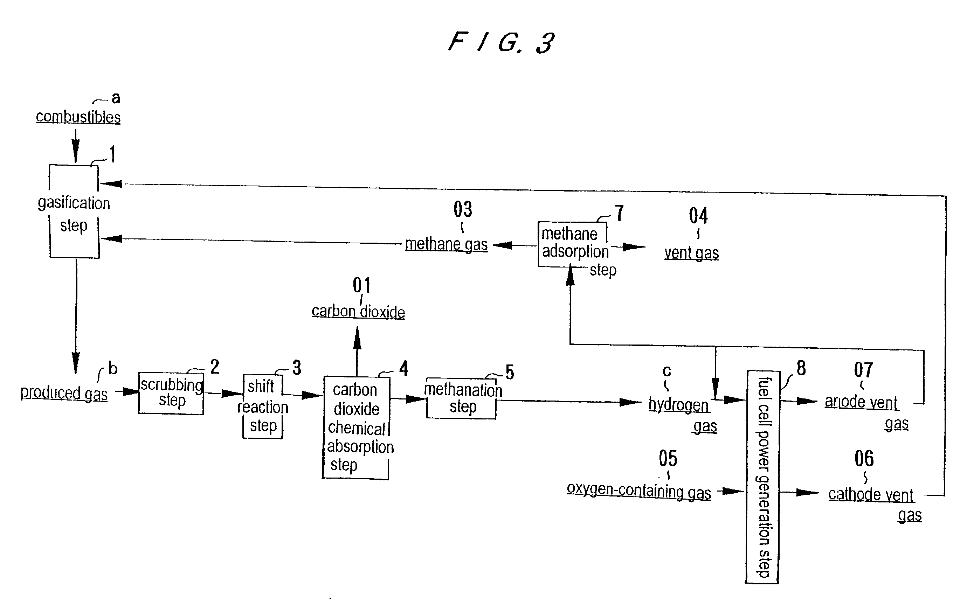

In the case where the total concentration of $N_2$ and Ar in the gas after the methanation step is 10% or less, the hydrogen purifying step may be eliminated from the system. In this case, as shown in FIG. 3, a part of the anode vent gas to be circulated through the anode is always withdrawn to prevent $N_2$, Ar and $CH_4$ contained in the anode hydrogen gas from being enriched. The withdrawn anode vent gas may be sent to a methane adsorption step, or alternatively may be separately treated.

In the gasification step of combustibles, a large amount of thermal energy is generated, and hence it is important to utilize such thermal energy effectively. Further, when fuel cell power generation is carried out, chemical energy of fuel gas is converted into electric energy, and thermal energy which is approximately the same amount as the electric energy, and such thermal energy is recovered as cooling exhaust heat of the cell. However, in the case of a phosphoric acid fuel cell, especially a proton exchange membrane fuel cell, the recovered exhaust heat is a low value heat having a temperature of about 70 to 80°C because the operating temperature of the fuel cell is low. Therefore, how to utilize such exhaust heat effectively is very important to improve total energy efficiency in the power generation system.

According to the present invention, a hydrogen purifying step using hydrogen-absorbing alloy is provided for the purpose of separating $N_2$ and Ar gas from gases and raising the pressure of hydrogen gas without consuming power. As a heat source for releasing hydrogen from the hydrogen-absorbing alloy in the hydrogen purifying step, in the embodiment in which the fuel cell power generation step is provided, the exhaust heat of the fuel cell is utilized, and in the embodiment in which the fuel cell is not provided, the thermal energy generated in the gasification step is utilized.

In the present invention, there is provided a methane adsorption step in which methane is adsorbed and recovered from a hydrogen purification vent gas discharged from the hydrogen purifying step, and the recovered methane is fed to the gasification step where methane is converted by steam reforming reaction into hydrogen and carbon monoxide through the utilization of high temperature and high steam content in the gasification step. Thus, in the whole system according to the present invention, the loss of hydrogen and carbon monoxide attributable to the methanation reaction does not occur. Further, the methane adsorption step vent gas composed mainly of nitrogen and argon may be utilized instead of air for process instrumentation. Here, the process instrumentation refers to the use of gas for the operation of valves or the like. When the concentration of $CH_4$ in the hydrogen purification vent gas is 5% or less, the methane adsorption step may be eliminated from the system. In this case, the hydrogen purification vent gas is separately treated. Although the treatment method employed is not limited, thermal energy may be recovered by applying a catalytic combustion method or the like.

Therefore, in the present invention, the energy efficiency in the hydrogen production system and the fuel cell power generation system is promoted, and the economical efficiency of the hydrogen production system and the fuel cell power generation system is improved.

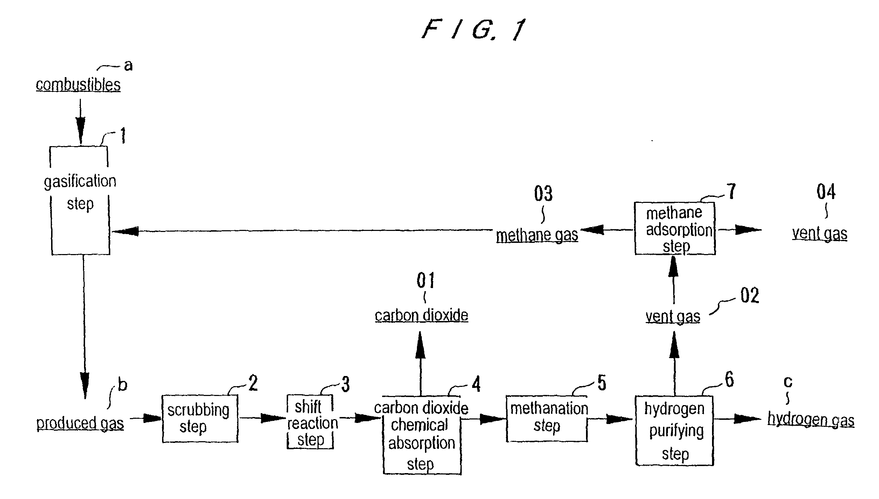

Next, these steps in the hydrogen production system and the fuel cell power generation system shown in FIGS. 1, 2 and 3 will be described in more detail.

1) Gasification step

In a gasification step of the present invention, there are two types, one is a single-stage gasification step using a low-temperature gasification furnace, the other is a two-stage gasification step using a low-temperature gasification furnace and a high-temperature gasification furnace.

In the single-stage gasification step, combustibles comprising wastes are supplied to a low-temperature gasification furnace as a fluidized-bed gasification furnace where the combustibles are pyrolyzed in the temperature range of 400 to 1000°C to produce gases containing hydrogen and carbon monoxide and a trace amount of hydrocarbons. In this case, raising the temperature from temperature at the time of the introduction of the raw material to the temperature in the range of 400 to 1000°C is carried out by partial combustion of the combustibles. Incombustibles contained in the combustibles are discharged from the gasification furnace. The gasification furnace may be a fluidized-bed furnace, or alternatively may be a rotary kiln, a stoker furnace or the like. When combustibles, such as municipal wastes, which have irregular shapes and contain incombustibles are used as the raw material, it is desirable to use the fluidized-bed furnace. This is because in the fluidized-bed furnace, unburned material does not adhere to the incombustibles to be discharged from the furnace, thus being less likely to pose a problem of the treatment and disposal of incombustibles. Further, when the fluidized-bed furnace is adopted, the bed temperature is preferably low so far as pyrolysis is not hindered. Specifically, the furnace is preferably operated at a temperature of 400 to 600°C because the incombustibles are not oxidized and thus can be easily reutilized.

In the two-stage gasification step, combustibles are pyrolyzed and gasified at a temperature of 400 to 1000°C in a low-temperature gasification furnace to produce gas, and the produced gas is supplied into a high-temperature gasification furnace. In the high-temperature gasification furnace, the produced gas is further gasified at a temperature of 1000 to 1500°C to reduce the molecular weight of the produced gas. The high-temperature gasification furnace is kept at the melting temperature of ash content contained in the produced gas or higher. Thus, 80 to 90% of the ash content contained in the produced gas is slagged, and the slag is discharged as molten slag to the outside of the system. The organic matter and hydrocarbons contained in the produced gas are completely decomposed in the high-temperature gasification furnace into hydrogen, carbon monoxide, steam, and carbon dioxide.

2) Scrubbing step

According to the present invention, gases are brought in contact with a scrubbing water in a scrubbing tower of a scrubbing step to remove acid gases such as hydrogen sulfide and hydrogen chloride down to 10 ppm or less, preferably 1 ppm or less. As a scrubbing water, tap water or industrial water may be used, but alkaline solution comprising water and 0.05 to 5% of added sodium hydroxide is more preferable. In the case of using sodium hydroxide solution as a scrubbing water, acid gases are absorbed and removed by the following neutralization reaction. Soot and dust in the produced gas are scrubbed and removed in this step because they would cause clogging of gas passages in the subsequent steps.

$$H_2S + NaOH \rightarrow NaHS + H_2O \tag{1}$$

$$HCl + NaOH \rightarrow NaCl + H_2O \tag{2}$$

3) Shift reaction step

In the present invention, there is provided a shift reaction step in which the following shift reaction is carried out in a shift reactor packed with a shift reaction catalyst.

$$CO + H_2O \rightarrow CO_2 + H_2 \tag{3}$$

Steam contained in the produced gas is utilized as steam necessary for the reaction. The shift reaction is an exothermic reaction. Therefore, a lower reaction temperature lowers the equilibrium concentration of carbon monoxide, but brings the reaction rate down. For this reason, the reaction temperature is preferably in the range of 200 to 250°C. The type and form of the catalyst are not particularly limited as far as the shift reaction can be accelerated. Catalysts suitable for use in the above temperature range include copper-zinc-base shift reaction catalysts.

A trace amount of hydrogen sulfide may be contained in the scrubbed gas depending on operating condition and operation control of the scrubbing step. In order to prevent shift reaction catalyst in the shift reaction step from being poisoned, it is desirable to provide a dry-type desulfurizer as a deeply desulfurizing means for thereby reducing concentration of hydrogen sulfide in the gas after desulfurization to 1 ppm or lower, preferably 0.1 ppm or lower.

According to the present invention, the desulfurizer comprises a container charged with a desulfurizing agent. Although the shape of the container and material of the container are not limited, it is desirable that the shape of container is cylindrical and the material of the container is stainless steel because of temperature and pressure of gas. As a desulfurizing agent, oxides such as iron oxide, zinc oxide or calcium oxide, or activated carbon, or particularly adsorbent such as activated carbon whose surface carries an alkaline agent is preferable. As a shape of the desulfurizing agent, granular shape, pellet-like shape or honeycomb-like shape is preferable. In case of using zinc oxide, the desulfurizing reaction is expressed as follows:

$$ZnO + H_2S \rightarrow ZnS + H_2O \qquad (4)$$

If the gasification temperature in the gasification step is relatively low, for example 700°C or lower, the gas reaction such as water gas reaction in the gasification step does not progress sufficiently, and in some cases, hydrocarbon components such as methane or tar remain in the produced gas. In this case, a reforming step may be provided upstream of the shift reaction step. That is, hydrocarbon components react with steam at a temperature of 700 to 1000°C under a reforming catalytic action for thereby decomposing the hydrocarbon components and producing hydrogen and carbon monoxide.

Further, in the case where the concentration of carbon monoxide in the produced gas is 5% or less, especially 1% or less, the amount of hydrogen produced by the CO conversion is extremely small. Therefore, carbon monoxide may be removed only by the methanation step as the subsequent step without providing the shift reaction step.

4) Carbon dioxide chemical absorption step

According to the present invention, a carbon dioxide chemical absorption step is provided, and gases are brought in contact with an absorption solution in an absorbing tower to absorb and separate $CO_2$. As an absorption solution, hot potassium carbonate absorption solution or alkanolamine absorption solution is preferable, and in the present invention, alkanolamine absorption solution having a high absorbing ability is more preferable. Specific examples of absorbents applicable herein include monoethanolamine (MEA), diethanolamine (DEA), and methyldiethanolamine (MDEA) and the like. An absorption reaction by alkanolamine absorption solution is represented by the following formula:

$$R\text{-}NH_2 + H_2O + CO_2 \rightarrow R\text{-}NH_3HCO_3 \qquad (5)$$

Since the above reaction is an exothermic reaction, the lower adsorption temperature is, the more advantageous adsorption is, but the temperature range of 12 to 40°C which can be relatively easily controlled is preferable. The higher gas pressure is, the more advantageous adsorption is, but in the present invention, because absorption solution having a relatively high absorption ability is used, $CO_2$ can be absorbed and separated down to 1% or less, preferably 0.1% or less in a low pressure range such as a pressure of atmospheric pressure to about 7 atmospheres. Further, when the absorption ability of the employed absorption solution is saturated, the absorption solution is sent to a regeneration tower in which the absorption solution is regenerated at a temperature of 100 to 150°C and $CO_2$ gas is recovered. The regenerated absorption solution is returned to the absorption tower. As a heat source required for heating the absorption solution at the time of regeneration, steam recovered in the gasification step is used. Steam in the gases is removed by condensation to such a degree of saturation vapor pressure of absorption temperature in this step. Acid gases such as hydrogen sulfide and hydrogen chloride are further absorbed and removed in this step.

Further, instead of the above regeneration method of absorption solution using steam, a method in which the absorption solution to be sent to the regeneration tower is heated to 50 to 80°C by using a part or whole of stack exhaust heat in a fuel cell power generation step (described later), and a part or whole of the cathode vent gas is introduced as a regeneration gas from the lower portion of the absorption tower may be used.

5) Methanation step

In the present invention, a methanation step is provided for the purpose of reducing the concentration of carbon monoxide in the gas after the shift reaction to 10 ppm or less, preferably 1 ppm or less and reducing the concentration of carbon dioxide in the gas after the shift reaction to 100 ppm or less, preferably 10 ppm or less. Specifically, the following methanation reaction is carried out in a shift reactor packed with a methanation catalyst.

$$CO + 3H_2 \rightarrow CH_4 + H_2O \qquad (6)$$

$$CO_2 + 4H_2 \rightarrow CH_4 + 2H_2O \qquad (7)$$

Hydrogen contained in the gas after the shift reaction is utilized as hydrogen necessary for the reaction. The methanation reaction is exothermic. Therefore, a lower reaction temperature lowers the equilibrium concentration of carbon monoxide, but brings the reaction rate down. For this reason, the reaction temperature is preferably in the range of 200 to 350°C. Both the type and form of the catalyst are not limited as far as the shift reaction can be accelerated. Nickel-base, iron-base, and ruthenium-base methanation catalysts are suitable.

Further, since water produced by the methanation reaction is poisonous to the hydrogen-absorbing alloy used in the subsequent step, it is desirable that dehumidifying means is provided to remove the water content down to 100 ppm or less, preferably 10 ppm or less. Although the dehumidifying means is not particularly limited, a cooling condensation method, an adsorption method using silica gel or the like, or a combination of these methods is preferable.

6) Hydrogen purifying step

According to the present invention, a hydrogen purifying step using hydrogen-absorbing alloy is provided to process gases from which $H_2S$ and HCl have been removed down to 10 ppm or less, preferably 1 ppm or less, and more preferably 0.1 ppm or less, CO has been removed down to 10 ppm or less, preferably 1 ppm or less, and $CO_2$ and $H_2O$ have been removed down to 100 ppm or less, preferably 10 ppm or less, respectively. Gases are introduced into a container housing hydrogen-absorbing alloy therein, and hydrogen is absorbed by the hydrogen-absorbing alloy while the alloy is cooled, thus separating $N_2$ and Ar from hydrogen. After the absorption of hydrogen by the hydrogen-absorbing alloy is saturated, nitrogen gas and argon gas are purged from the alloy container, and then the hydrogen-absorbing alloy is heated to release hydrogen therefrom. The released hydrogen gas is pressurized and stored in a hydrogen tank, or is supplied to the fuel cell power generation step via the hydrogen tank. Nitrogen and argon in the hydrogen gas which has been released and purified are removed down to 100 ppm or less, respectively, and the hydrogen concentration reaches 99.9 % or more. The employed hydrogen-absorbing alloy is not particularly limited as far as the hydrogen-absorbing alloy has a large hydrogen absorbing capacity. The hydrogen-absorbing alloy having a desorption pressure of 1 to 10 atmospheres at a temperature of 70°C, preferably an absorbing and releasing characteristics of 3 to 7 atmospheres is desirable so that low exhaust heat having a temperature of about 70°C generated from a phosphoric acid fuel cell or a proton exchange membrane fuel cell can be utilized as a heat source for hydrogen desorption. Specific examples of such alloy include $LaNi_5$ alloy and TiFe alloy. The hydrogen absorption reaction and hydrogen desorption reaction by $LaNi_5$ alloy are represented by the following:

$$\text{Hydrogen absorption reaction: } LaNi_5 + 3H_2 \rightarrow LaNi_5H_6 + \text{exothermicity} \qquad (8)$$

$$\text{Hydrogen desorption reaction: } LaNi_5H_6 \rightarrow LaNi_5 + 3H_2 + \text{endothermicity} \qquad (9)$$

Because the hydrogen absorption reaction is an exothermic reaction as expressed in the formula (8), in the case where partial pressure of hydrogen is constant, it is necessary to keep absorbing temperature at a low value by cooling the hydrogen-absorbing alloy during hydrogen absorption, especially in the case of low partial pressure of hydrogen. The lower hydrogen absorption temperature is, the more advantageous absorption is, but the temperature range of 12 to 32°C which can be easily maintained by a cooling water is preferable. Further, because the hydrogen desorption reaction is an endothermic reaction as expressed in the formula (9), in order to increase the pressure of the released hydrogen, it is necessary to raise desorption temperature by heating the hydrogen-absorbing alloy during hydrogen desorption. According to the present invention, as a heat source, in the embodiment in which a fuel cell power generation step is provided, a cooling water, in a fuel cell stack, having a temperature of about 70°C is used, and in the embodiment in which the fuel cell power generation step is not provided, the recovered steam or hot water in the gasification step is used. Further, the hydrogen-absorbing alloy is housed in a heat exchanger-type container having a heat exchange means such as a jacket or a tube for heat exchange, and two series of containers in which the hydrogen-absorbing alloy is housed, respectively, are provided to perform hydrogen absorption and hydrogen desorption continuously, and the two series of the containers are switched by solenoid valves.

When the total concentration of $N_2$ and Ar in the gas after the methanation step is 10% or less, the hydrogen purifying step may be eliminated from the system as shown in FIG. 3.

7) Methane adsorption step

According to the present invention, a methane adsorption step is provided to adsorb and recover methane in a vent gas discharged from the hydrogen purifying step. Specifically, the vent gas is introduced into a methane adsorption tower to adsorb and separate methane by bringing methane in the gas into contact with adsorbent. In order to give full play to adsorption ability of methane in the adsorption tower, it is desirable that adsorbent having selective adsorption characteristic of methane is filled into the adsorption tower. Specifically, adsorbent having a relatively high adsorption ability of methane and a low adsorption ability of $N_2$ and Ar is preferred, for example, carbon molecular sieves, zeolite molecular sieves, activated carbon, or activated alumina is preferable. The lower adsorption temperature is, the more advantageous adsorbent is, but the temperature range of 12 to $40°C$ which can be relatively easily controlled is preferable. The higher gas pressure is, the more advantageous adsorption is, but in the present invention, because adsorbent having a relatively high adsorption ability is used, methane can be sufficiently adsorbed and separated even in a low pressure range such as a pressure of atmospheric pressure to about 7 atmospheres. When the adsorption capacity of the adsorbent has been saturated, vacuum desorption is carried out by means of a vacuum pump or a blower. The desorbed methane gas is sent to the gasification step where methane is converted by the following steam reforming reaction into hydrogen and carbon monoxide again.

$$CH_4 + H_2O \rightarrow CO + 3H_2 \tag{10}$$

When the concentration of $CH_4$ in the hydrogen purification vent gas is 5% or less, the methane adsorption step may be eliminated. In this case, the hydrogen purification vent gas is separately treated. Although the treatment method employed is not limited, a catalytic combustion method or the like may be applied to recover thermal energy.

8) Fuel cell power generation step

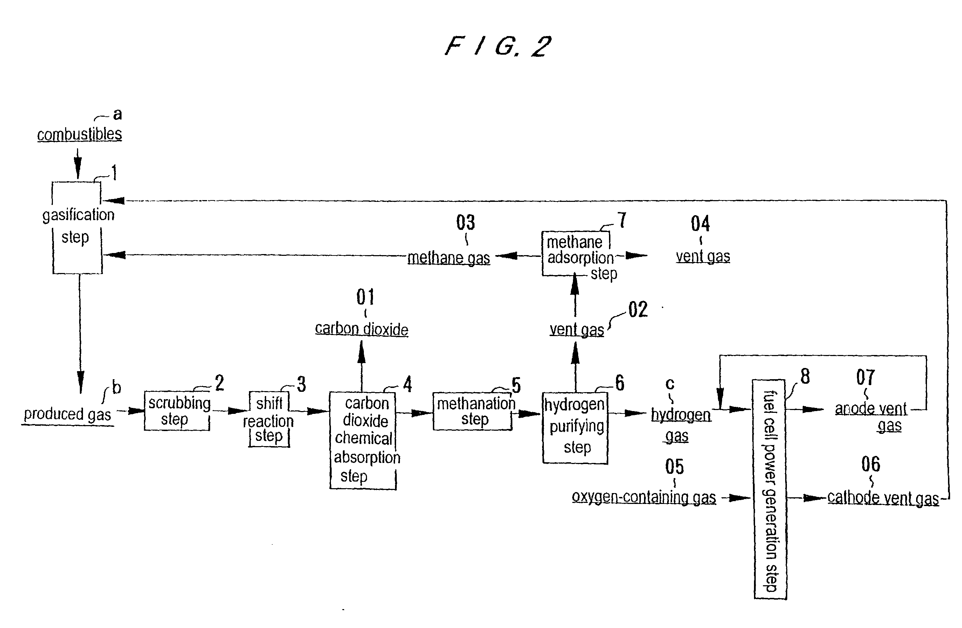

According to the present invention, in the embodiment shown in FIG. 2 in which the fuel cell power generation is provided, the hydrogen gas produced in the gas processing step has a relatively low temperature, a high hydrogen concentration, and a low carbon monoxide content. Therefore, the fuel cell employed is preferably a phosphoric acid fuel cell or especially a proton exchange membrane fuel cell, operatable at a relatively low temperature. Cell reactions involved in the phosphoric acid or proton exchange membrane fuel cell are as follows:

$$\text{Anode reaction: } H_2 \rightarrow 2H^+ + 2e^- \tag{11}$$

$$\text{Cathode reaction: } 1/2O_2 + 2H^+ + 2e^- \rightarrow H_2O \tag{12}$$

More specifically, hydrogen gas is supplied to the anode compartment in a fuel cell stack while air or oxygen-enriched air or oxygen gas is supplied to the cathode compartment, whereby electricity is generated by the cell reactions. The operating temperature of the phosphoric acid fuel cell and the operating temperature of the proton exchange membrane fuel cell are around $200°C$ and around $80°C$, respectively. Since these reactions are exothermic reactions, the stacks must be cooled to maintain the above operating temperatures. According to the present invention, stack cooling water is circulated between the fuel cell power generation step and the hydrogen purifying step using hydrogen-absorbing alloy to utilize stack exhaust heat as a heat source for hydrogen desorption. Further, in the fuel cell power generation, in order to ensure the power generation efficiency, it is a common practice to leave about 30% of the hydrogen gas which has been supplied to the anode compartment in the stack without consuming 100% of the supplied hydrogen gas and to discharge it as an anode vent gas from the stack. In the present invention, the anode vent gas is mixed with an anode supply gas (that is, hydrogen gas to be supplied to stack) through a gas mixer such as an ejector, and is circulated through the anode compartment. Further, the anode vent gas may be led to the hydrogen purifying step in which the vent gas is recovered, and the recovered gas is purified again and pressurized, and then supplied to the stack. In the case where steam is contained in the anode vent gas, a steam removing apparatus may be provided upstream of the hydrogen purifying step.

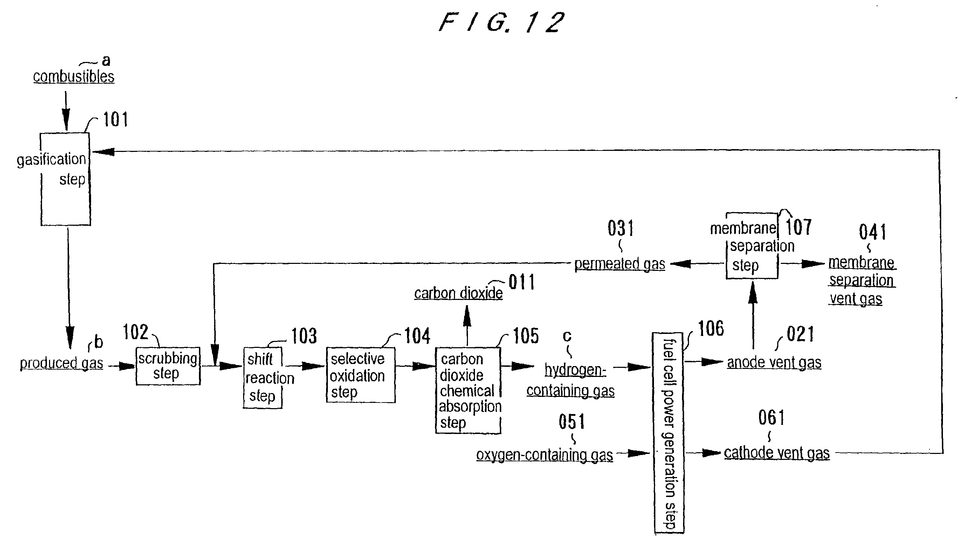

Further, extensive and intensive studies by the present inventors have led to the completion of a second aspect of the present invention which relates to a fuel cell power generation system shown in FIG. 12 wherein a high-quality hydrogen-containing gas suitable for fuel cell power generation is efficiently produced from a low-quality gas produced by gasification of combustibles and is utilized in power generation using a fuel cell.

Further, the hydrogen-containing gas produced by the method according to the present invention may be supplied to the anode of the fuel cell stack while the oxygen-containing gas may be supplied as an oxidizing agent gas to the cathode of the fuel cell stack, thus generating electricity. Then, the cathode vent gas may be sent to the gasification step for use as a gasifying agent and/or a fluidizing gas for combustibles. In the present invention, the fuel cell used in the fuel cell power generation step is preferably a proton exchange membrane fuel cell or a phosphoric acid fuel cell.

The produced gas yielded in the gasification of combustibles varies with the type of combustibles. In general, the produced gas contains several percent to several ten percent of hydrogen and carbon monoxide as fuel components, and several percent to several ten percent of carbon dioxide, nitrogen, argon and steam as non-fuel-gas components, and further contains several ppm to several thousands of ppm of hydrogen sulfide and hydrogen chloride as minor acid gas components.

However, as hydrogen gas supplied to the fuel cell, a high hydrogen concentration, and a carbon monoxide concentration as low as possible are required. Specifically, in the case of a proton exchange membrane fuel cell, it is necessary to lower carbon monoxide concentration to 100 ppm or less, preferably 10 ppm or less, and more preferably 1 ppm or less. Further, because acid gases, especially hydrogen sulfide and hydrogen chloride are poisonous to electrode catalyst of a fuel cell, and various gas absorbent, adsorbent and catalyst in the subsequent steps, it is necessary to remove such acid gases down to 1 ppm or less, preferably 0.1 ppm or less. Further, in order to increase hydrogen concentration, it is necessary to separate carbon dioxide, nitrogen, argon and methane.

In the conventional hydrogen purifying technology, impurity gases other than hydrogen are generally separated and removed by a single step such as a pressure swing adsorption (PSA) step or a membrane separation step. However, in this case, a high pressure is required and thus consumes large energy, and the recovery rate of hydrogen is low. In the present invention, impurity gases other than hydrogen are divided into four groups, i.e. acid gases, carbon monoxide, carbon dioxide and steam, and nitrogen and argon according to their separation characteristics, and an optimum separation technology is employed according to their separation characteristics and concentration range.

Acid gases such as hydrogen sulfide and hydrogen chloride are scrubbed and removed by dissolution of such acid gases into a scrubbing liquid and chemical reaction thereof in a scrubbing step. Further, when the acid gases remain in excess of an allowable concentration, the acid gases can also be removed by adsorption in the preceding stage of a shift reactor as the subsequent step.

With regard to carbon monoxide, a shift reaction step and a selective oxidation step are provided. First, CO catalytically reacts with steam and is converted into hydrogen and carbon dioxide in the shift reaction step, and the residual CO is further removed in the selective oxidation step. When the concentration of CO in the produced gas is 1% or less, CO may be removed only by the selective oxidation step without providing the shift reaction step.

With regard to carbon dioxide and steam, there is provided a carbon dioxide chemical absorption step in which carbon dioxide is chemically absorbed by alkaline absorption solution and steam is condensed and removed at the absorption temperature. As a separating method of $CO_2$ gas, there are a membrane separation method, an adsorption method and a chemical absorption method. In the present invention, exhaust heat generated in large quantities in the gasification step or the fuel cell power generation step can be utilized, and absorption can be performed under a low pressure such as a pressure of atmospheric pressure to about 10 atmospheres. Further, the recovery rate of hydrogen is extremely high, acid gases such as hydrogen sulfide and hydrogen chloride can be further absorbed and removed, and $CO_2$ gas separated and recovered has high purity and thus high commercial value. Therefore, it is desirable to use carbon dioxide chemical absorption method.

With regard to nitrogen and argon, the anode vent gas discharged from the fuel cell is introduced into a membrane separation step in which hydrogen and steam are selectively passed through the membrane, and the permeated gas is returned to the shift reaction step for thereby being recovered, while nitrogen and argon are discharged as a membrane separation step vent gas into the outside of the system. The membrane separation step vent gas composed mainly of nitrogen and argon may be utilized instead of air for process instrumentation. The reason why the application of the membrane separation step for separating nitrogen and argon to the anode vent gas rather than the fuel gas is for increasing the recovery rate of hydrogen and reducing the necessary membrane area. More specifically, 50% or more of hydrogen contained in the fuel gas is utilized in the fuel cell power generation step, and hence the membrane separation load for the anode vent gas is lower than that for the fuel gas in the membrane separation step. When the concentration of hydrogen in the anode vent gas is 30% or less, the membrane separation step may be omitted. In this case, the anode vent gas is separately treated. Although the treatment method employed is not limited, a catalytic combustion method or the like may be applied to recover thermal energy.

Therefore, in the present invention, the energy efficiency in the fuel cell power generation system is promoted, and the economical efficiency of the fuel cell power generation system is improved.

These steps in the fuel cell power generation system shown in FIG. 12 will be described in more detail. The fuel cell power generation system shown in FIG. 12 involves a number of steps identical to steps in the hydrogen production system shown in FIG. 1. The fuel cell power generation system will be explained in the sequence of steps although the explanation is partially overlapped.

1) Gasification step

In a gasification step of the present invention, there are two types, one is a single-stage gasification step using a low-temperature gasification furnace, the other is a two-stage gasification step using a low-temperature gasification furnace and a high-temperature gasification furnace.

In the single-stage gasification step, combustibles comprising wastes are supplied to a low-temperature gasification furnace as a fluidized-bed gasification furnace where the combustibles are pyrolyzed in the temperature range of 400 to 1000°C to produce gases containing hydrogen and carbon monoxide and a trace amount of hydrocarbons. In this case, raising the temperature from temperature at the time of the introduction of the raw material to the temperature in the range of 400 to 1000°C is carried out by partial combustion of the combustibles. Incombustibles contained in the combustibles are discharged from the gasification furnace. The gasification furnace may be a fluidized-bed furnace, or alternatively may be a rotary kiln, a stoker furnace or the like. When combustibles, such as municipal wastes, which have irregular shapes and contain incombustibles are used as the raw material, it is desirable to use the fluidized-bed furnace. This is because in the fluidized-bed furnace, unburned material does not adhere to the incombustibles to be discharged from the furnace, thus being less likely to pose a problem of the treatment and disposal of incombustibles. Further, when the fluidized-bed furnace is adopted, the bed temperature is preferably low so far as pyrolysis is not hindered. Specifically, the furnace is preferably operated at a temperature of 400 to 600°C because the incombustibles are not oxidized and thus can be easily reutilized.

In the two-stage gasification step, combustibles are pyrolyzed and gasified at a temperature of 400 to 1000°C in a low-temperature gasification furnace to produce gas, and the produced gas is supplied into a high-temperature gasification furnace. In the high-temperature gasification furnace, the produced gas is further gasified at a temperature of 1000 to 1500°C to reduce the molecular weight of the produced gas. The high-temperature gasification furnace is kept at the melting temperature of ash content contained in the produced gas or higher. Thus, 80 to 90% of the ash content contained in the produced gas is slagged, and the slag is discharged as molten slag to the outside of the system. The organic matter and hydrocarbons contained in the produced gas are completely decomposed in the high-temperature gasification furnace into hydrogen, carbon monoxide, steam, and carbon dioxide.

2) Scrubbing step

According to the present invention, gases are brought in contact with a scrubbing water in a scrubbing tower of a scrubbing step to remove acid gases such as hydrogen sulfide and hydrogen chloride down to 10 ppm or less, preferably 1 ppm or less. As a scrubbing water, tap water or industrial water may be used, but alkaline solution comprising water and 0.05 to 5% of added sodium hydroxide is more preferable. In the case of using sodium hydroxide solution as a scrubbing water, acid gases are absorbed and removed by the following neutralization reaction. Soot and dust in the produced gas are scrubbed and removed in this step because they would cause clogging of gas passages in the subsequent steps.

$$H_2S + NaOH \rightarrow NaHS + H_2O \qquad\qquad (13)$$

$$HCl + NaOH \rightarrow NaCl + H_2O \qquad\qquad (14)$$

3) Shift reaction step

According to the present invention, a shift reaction step is provided, and the following shift reaction is carried out in a shift reactor packed with a shift reaction catalyst.

$$CO + H_2O \rightarrow CO_2 + H_2 \qquad\qquad (15)$$

Steam contained in the produced gas is utilized as steam necessary for the reaction. The shift reaction is an exothermic reaction. Therefore, a lower reaction temperature lowers the equilibrium concentration of carbon monoxide, while brings the reaction rate down. For this reason, the reaction temperature is preferably in the range of 200 to 250°C. The type and form of the catalyst are not particularly limited as long as the shift reaction can be accelerated. Catalysts suitable for use in the above temperature range include copper-zinc-base shift reaction catalysts.

A trace amount of hydrogen sulfide may be contained in the scrubbed gas depending on operating condition and operation control of the scrubbing step. In order to prevent shift reaction catalyst in the shift reaction step from being poisoned, it is desirable to provide a dry-type desulfurizer as a deeply desulfurizing means for thereby reducing concentration of hydrogen sulfide in the gas after desulfurization to 1 ppm or lower, preferably 0.1 ppm or lower.

According to the present invention, the desulfurizer comprises a container charged with a desulfurizing agent. Although the shape of the container and material of the container are not limited, it is desirable that the shape of container is cylindrical and the material of the container is stainless steel because of temperature and pressure of gas. As a desulfurizing agent, oxides such as iron oxide, zinc oxide or calcium oxide, or activated carbon, or particularly adsorbent such as activated carbon whose surface carries an alkaline agent is preferable. As a shape of the desulfurizing agent, granular shape, pellet-like shape or honeycomb-like shape is preferable. In case of using zinc oxide, the desulfurizing reaction is expressed as follows:

$$ZnO + H_2S \rightarrow ZnS + H_2O \tag{16}$$

If the gasification temperature in the gasification step is relatively low, for example 700°C or lower, the gas reaction such as water gas reaction in the gasification step does not progress sufficiently, and in some cases, hydrocarbon components such as methane or tar remain in the produced gas. In this case, a reforming step may be provided upstream of the shift reaction step. That is, hydrocarbon components react with steam at a temperature of 700 to 1000°C under a reforming catalytic action for thereby decomposing the hydrocarbon components and producing hydrogen and carbon monoxide.

Further, in the case where the concentration of carbon monoxide in the produced gas is 1% or less, the amount of hydrogen produced by the CO shift reaction is extremely small. Therefore, carbon monoxide may be removed only by the selective oxidation step as the subsequent step without providing the shift reaction step.

4) Selective oxidation step

According to the present invention, a selective oxidation step is provided to lower the concentration of carbon monoxide in the gas after the shift reaction to 100 ppm or less, preferably 10 ppm or less, and more preferably 1 ppm or less. That is, the following selective oxidation reaction is carried out by supplying oxygen gas to a selective oxidation reactor packed with a selective oxidation catalyst while leading the above gases to the selective oxidation reactor.

$$CO + 1/2O_2 \rightarrow CO_2 \tag{17}$$

The larger the amount of oxygen supplied, the lower the concentration of the residual carbon monoxide. The amount of oxygen is preferably around 1.5 to 3.5 equivalent to carbon monoxide. The reaction temperature is preferably in the range of 10 to 180°C. Any catalyst may be used without particular limitation as far as the catalyst has high selectivity for oxidation of carbon monoxide and can realize high reaction rate. For example, a platinum-based catalyst or a gold catalyst with gold supported on alumina is suitable.

Preferably, the excess residual oxygen gas is catalytically combusted together with hydrogen to reduce the oxygen gas concentration to 10 ppm or less.

5) Carbon dioxide chemical absorption step

According to the present invention, a carbon dioxide chemical absorption step is provided, and gases are brought in contact with an absorption solution in an absorbing tower to absorb and separate $CO_2$. As an absorption solution, hot potassium carbonate absorption solution or alkanolamine absorption solution is preferable, and in the present invention, alkanolamine absorption solution having a high absorbing ability is more preferable. Specific examples of absorbents applicable herein include monoethanolamine (MEA), diethanolamine (DEA), and methyldiethanolamine (MDEA) and the like. An absorption reaction by alkanolamine absorption solution is represented by the following formula:

$$R\text{-}NH_2 + H_2O + CO_2 \rightarrow R\text{-}NH_3HCO_3 \tag{18}$$

Since the above reaction is an exothermic reaction, the lower adsorption temperature is, the more advantageous adsorption is, but the temperature range of 12 to 40°C which can be relatively easily controlled is preferable. The higher gas pressure is, the more advantageous adsorption is, but in the present invention, because absorption solution having a relatively high absorption ability is used, $CO_2$ can be absorbed and separated down to 0.5% or less, preferably 0.1% or less in a low pressure range such as a pressure of atmospheric pressure to about 10 atmospheres. Further, when the absorption ability of the employed absorption solution is saturated, the absorption solution is sent to a regeneration tower in which the absorption solution is regenerated at a temperature of 100 to 150°C and $CO_2$ gas

is recovered. The regenerated absorption solution is returned to the absorption tower. As a heat source required for heating the absorption solution at the time of regeneration, steam recovered in the gasification step is used. Steam in the gases is removed by condensation to such a degree of saturation vapor pressure of absorption temperature in this step. Acid gases such as hydrogen sulfide and hydrogen chloride are further absorbed and removed in this step.

6) Fuel cell power generation step

According to the present invention, the hydrogen gas produced in the gas processing step has a relatively low temperature, a high hydrogen concentration, and a low carbon monoxide content. Therefore, the fuel cell employed is preferably a phosphoric acid fuel cell or especially a proton exchange membrane fuel cell, operatable at a relatively low temperature. Cell reactions involved in the phosphoric acid or proton exchange membrane fuel cell are as follows:

$$\text{Anode reaction: } H_2 \rightarrow 2H^+ + 2e^- \tag{19}$$

$$\text{Cathode reaction: } 1/2O_2 + 2H^+ + 2e^- \rightarrow H_2O \tag{20}$$

More specifically, hydrogen gas is supplied to the anode compartment in a fuel cell stack while air or oxygen-enriched air or oxygen gas is supplied to the cathode compartment, whereby electricity is generated by the cell reactions. The operating temperature of the phosphoric acid fuel cell and the operating temperature of the proton exchange membrane fuel cell are around $200°C$ and around $80°C$, respectively. Since these reactions are exothermic reactions, the stacks must be cooled to maintain the above operating temperatures. Further, in the fuel cell power generation, in order to ensure the power generation efficiency, it is a common practice to leave about 30% of the hydrogen gas which has been supplied to the anode compartment in the stack without consuming 100% of the supplied hydrogen gas and to discharge it as an anode vent gas from the stack.

7) Membrane separation step

In the present invention, a membrane separation step is provided for the purpose of recovering hydrogen and steam from the anode vent gas discharged from the fuel cell power generation step, and separating nitrogen and argon from the anode vent gas and discharging nitrogen and argon to the outside of the system. Specifically, the anode vent gas is introduced into a membrane primary side of a membrane module in the membrane separation step, and hydrogen and steam contained in the anode vent gas are selectively passed through the membrane and into the membrane secondary side by intermembranous differential pressure and are recovered, while a membrane separation step vent gas, which has not been passed through the membrane, is then discharged to the outside of the system. The separation membrane employed may be any one as far as the selectivity for hydrogen is high. Examples of suitable separation membranes include polymer membranes, such as polyimide membranes, polysulfone membranes, polyester membranes, and teflon membranes. Inorganic ceramic membranes may also be used. Regarding membrane separation pressure, as the intermembranous differential pressure is higher, the necessary membrane area is smaller. Therefore, it is advantageous to pressurize the anode vent gas by means of a compressor. On the other hand, the compressor consumes electric power, and the pressure of the anode vent gas at the inlet of the membrane module is preferably in the range of 5 to 20 atmospheres. The recovery of hydrogen in the membrane separation step is preferably set to 50 to 80% for economic reasons.

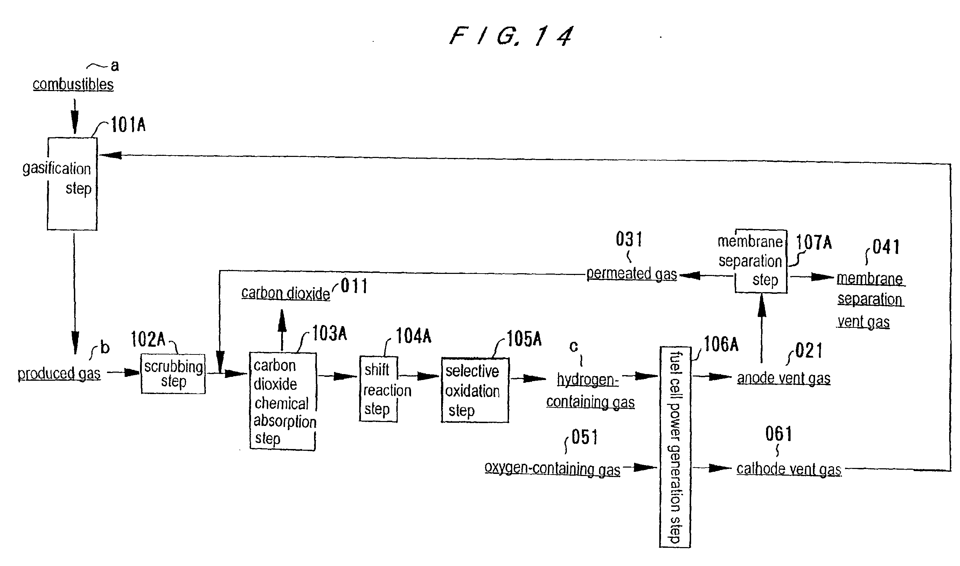

Further, the present inventors have completed a third aspect of the present invention which relates to a fuel cell power generation system shown in FIG. 14 wherein a high-quality hydrogen-containing gas suitable for fuel cell power generation is efficiently produced from a low-quality gas produced by gasification of combustibles and is utilized in power generation using a fuel cell.

The third aspect of the present invention shown in FIG. 14 is different from the second aspect of the present invention shown in FIG. 12 in the sequence of steps, partially.

1) Gasification step

This step is the same as that in the second aspect of the present invention, and hence repetitive description is eliminated.

2) Scrubbing step

This step is the same as that in the second aspect of the present invention, and hence repetitive description is eliminated.

3) Carbon dioxide chemical absorption step

This step is the same as that in the second aspect of the present invention, and hence repetitive description is eliminated.

4) Shift reaction step

This step is the same as that in the second aspect of the present invention, and hence repetitive description is eliminated.

5) Selective oxidation step

This step is the same as that in the second aspect of the present invention, and hence repetitive description is eliminated.

6) Fuel cell power generation step

This step is the same as that in the second aspect of the present invention, and hence repetitive description is eliminated.

7) Membrane separation step

This step is the same as that in the second aspect of the present invention, and hence repetitive description is eliminated.

**Brief Description of Drawings**

FIG. 1 is a block diagram of a hydrogen production system according to the present invention;
FIG. 2 is a block diagram of a fuel cell power generation system according to a first aspect of the present invention;
FIG. 3 is a block diagram of another fuel cell power generation system according to a first aspect of the present invention;

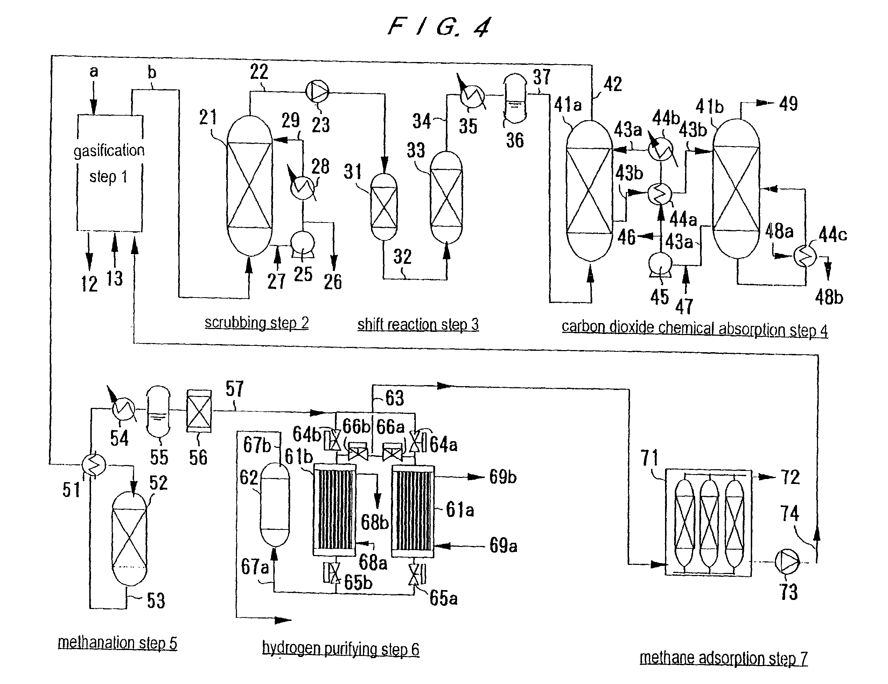

FIG. 4 is a block diagram showing a hydrogen production system according to a first embodiment of the present invention;

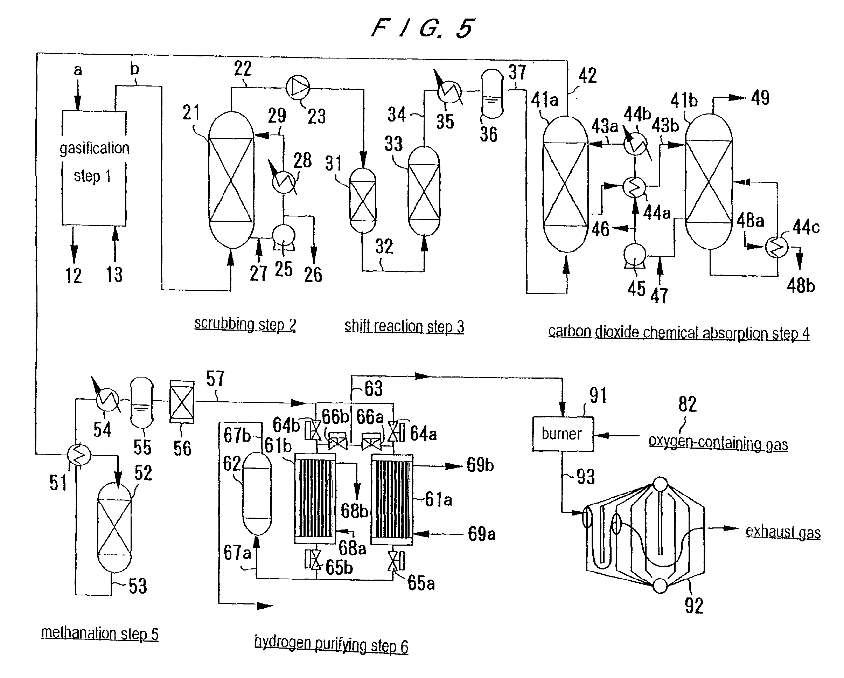

FIG. 5 is a block diagram showing a hydrogen production system according to a second embodiment of the present invention;

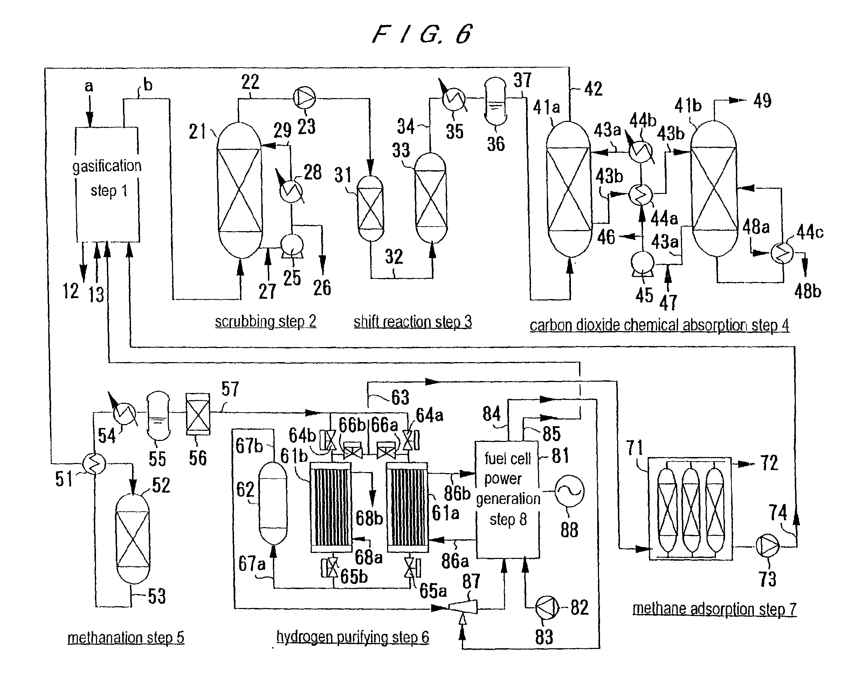

FIG. 6 is a block diagram showing a first aspect of a fuel cell power generation system according to a third embodiment of the present invention;

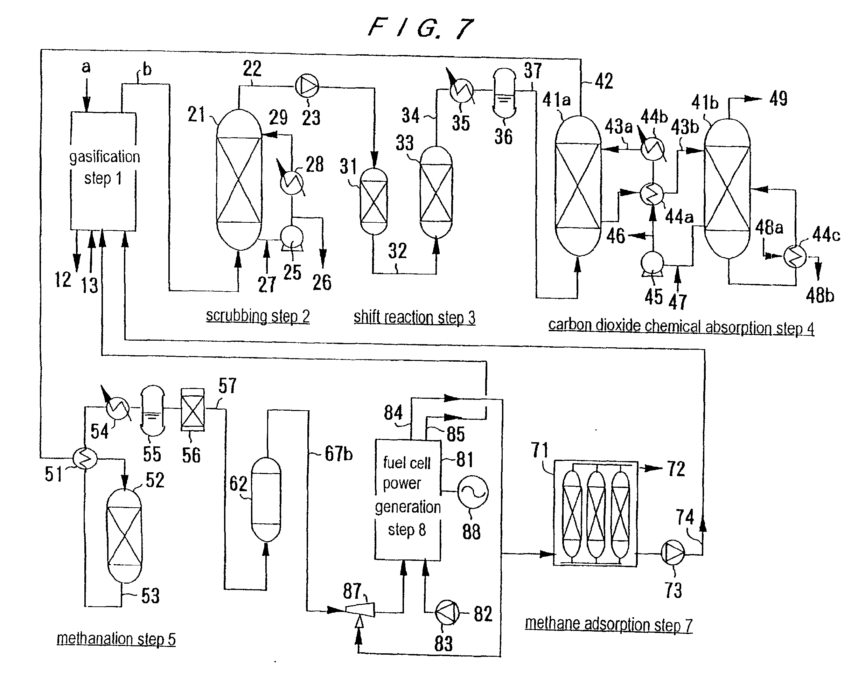

FIG. 7 is a block diagram showing a first aspect of a fuel cell power generation system according to a fourth embodiment of the present invention;

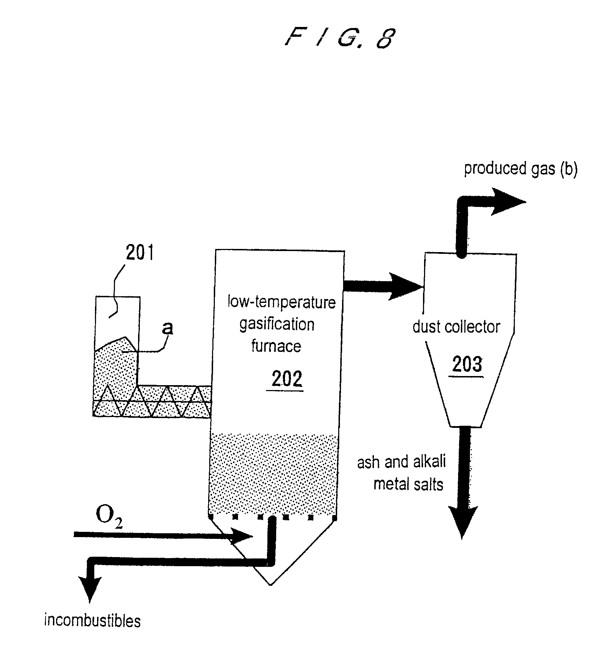

FIG. 8 is a schematic view showing an apparatus for carrying out a gasification step according to a first embodiment of the present invention;

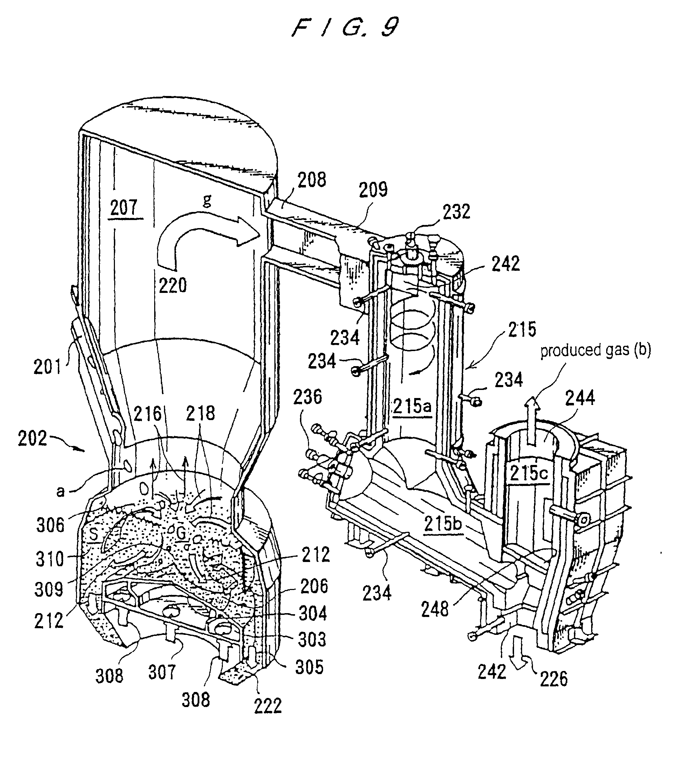

FIG. 9 is a diagram showing a typical configuration of a main constituent equipment in a second embodiment of the present invention;

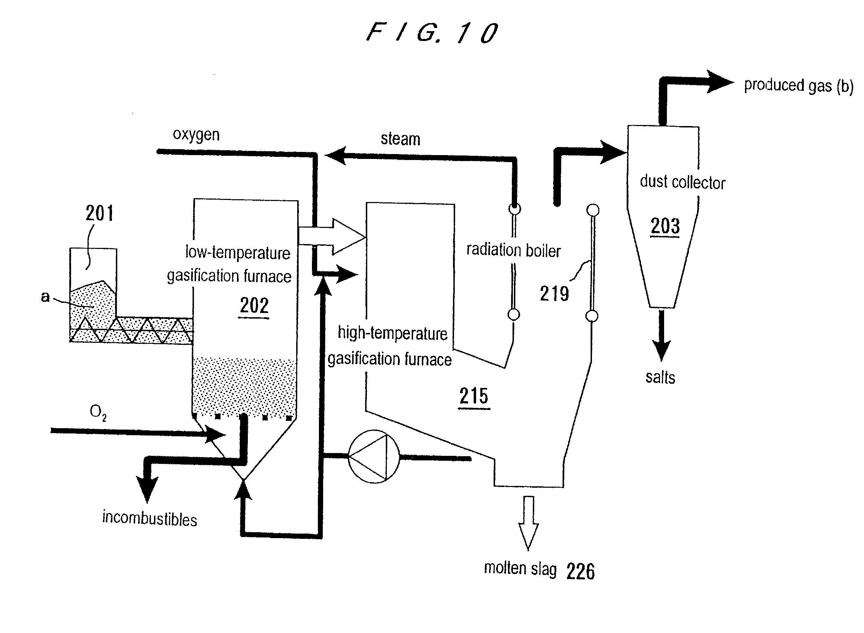

FIG. 10 is a schematic view showing an apparatus for carrying out a gasification step according to the second embodiment of the present invention;

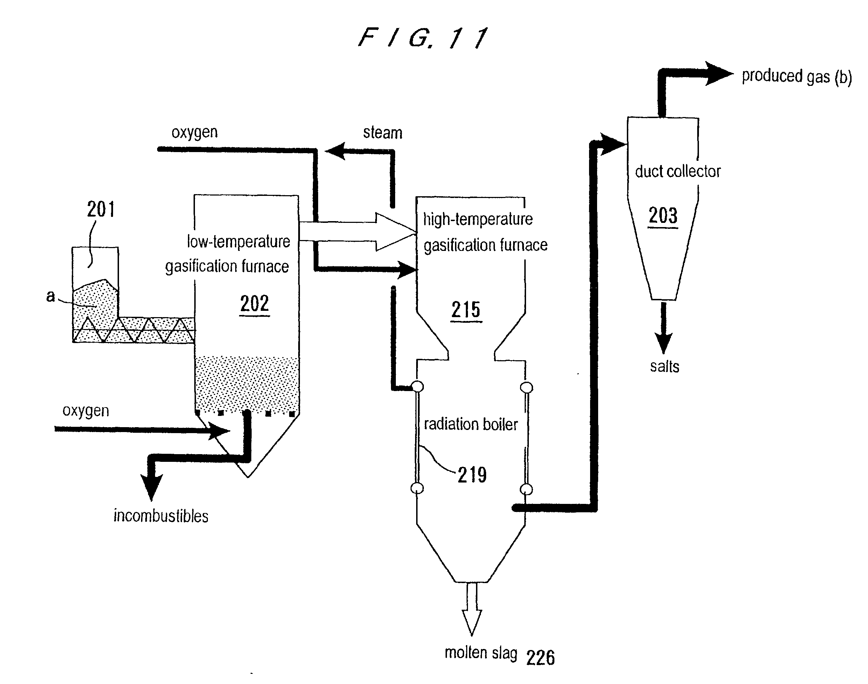

FIG. 11 is a schematic view showing an apparatus for carrying out a gasification step according to a third embodiment of the present invention;
FIG. 12 is a block diagram of a fuel cell power generation system according to a second aspect of the present invention;

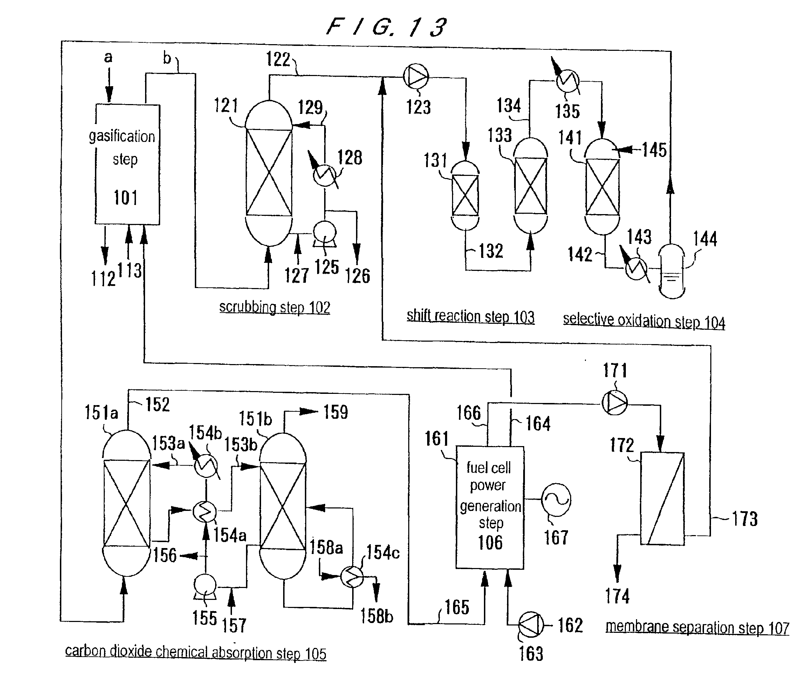

FIG. 13 is a block diagram showing a fuel cell power generation system according to an embodiment of a second aspect of the present invention;

FIG. 14 is a block diagram of a fuel cell power generation system according to a third aspect of the present invention; and

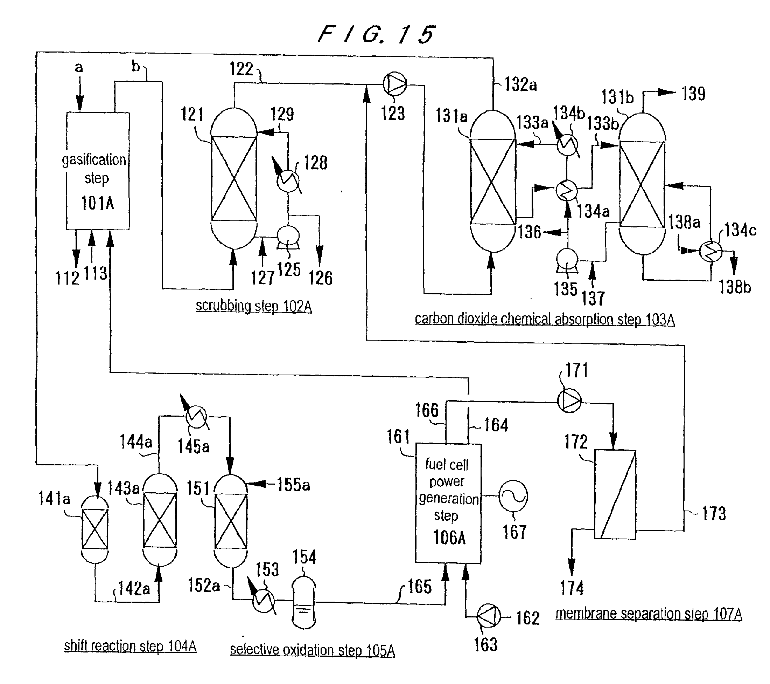

FIG. 15 is a block diagram showing a fuel cell power generation system according to an embodiment of a third aspect of the present invention.

**Best Mode for Carrying Out the Invention**

Embodiments of the hydrogen production system and the fuel cell power generation system by gasification of combustibles such as combustible wastes or coal according to the present invention will be described with reference to FIGS. 1 through 7. Here, combustible wastes include municipal wastes, refuse-derived fuel, solid-water mixture, used paper, plastic wastes, waste FRP, biomass wastes, automobile wastes, industrial wastes such as waste wood, low-grade coal, and waste oil. In FIGS. 1 through 7, like or corresponding steps or members are identified with the same reference numerals to avoid the repetition of the explanation.

FIG. 1 is a schematic diagram showing the hydrogen production system according to the present invention. As shown in FIG. 1, in the hydrogen production system according to the present invention, combustibles a are gasified in a gasification step 1. The resultant produced gas b is successively processed in a scrubbing step 2 for removing hydrogen sulfide and hydrogen chloride, a shift reaction step 3, a carbon dioxide chemical absorption step 4 for separating carbon dioxide (01) in the produced gas, a methanation step 5 for converting carbon monoxide and carbon dioxide in the gas into methane, and a hydrogen purifying step 6 for separating methane, nitrogen and argon in the gas, thus producing hydrogen gas c. A methane adsorption step 7 is provided to adsorb methane in a vent gas (02) discharged from the hydrogen purifying step and recover methane. The recovered methane gas (03) is returned to the gasification step 1 where methane is converted by steam reforming reaction into hydrogen and carbon monoxide. A vent gas (04) is discharged from a $CH_4$ (methane) adsorption step 7.

FIG. 2 is a schematic block diagram showing the fuel cell power generation system according to the first aspect of the present invention. As shown in FIG. 2, in the fuel cell power generation system according to the present invention, the hydrogen gas c obtained in the steps shown in FIG. 1 is supplied to a fuel cell power generation step 8 to generate electricity. In the fuel cell power generation step 8, the hydrogen gas c is supplied to the anode, while an oxygen-containing gas (05) is supplied to the cathode. An anode vent gas (07) is supplied to the anode and circulated through the anode in the fuel cell power generation step 8 for utilization thereof. On the other hand, a cathode vent gas (06) is sent to the gasification step 1 for use as a gasifying agent and/or a fluidizing gas for combustibles a.

FIG. 3 is a schematic diagram showing another fuel cell power generation system according to the first aspect of the present invention. As shown in FIG. 3, in the fuel cell power generation system according to the present invention, combustibles a such as combustible wastes or coal are gasified in a gasification step 1. The resultant produced gas b is successively processed in a gas scrubbing step 2 for removing hydrogen sulfide, hydrogen chloride and the like, a shift reaction step 3 for reacting carbon monoxide with steam to convert carbon monoxide into hydrogen and carbon dioxide, and a carbon dioxide chemical absorption step 4 for separating carbon dioxide (01) in the produced gas. Thereafter, hydrogen gas c is obtained after a methanation step 5 for converting carbon monoxide and carbon dioxide in the gas into methane, and the obtained hydrogen gas c is then supplied to a fuel cell power generation step 8 to generate electricity. Here, in the gasification step, a fluidized-bed furnace, a rotary kiln, a stoker furnace, a swirling-type melting furnace, and a TEXACO furnace may be used solely or in combination. The type of the fuel cell used in the fuel cell power generation step 8 is not particularly limited. However, because the temperature of hydrogen gas is relatively low and the content of carbon monoxide is low, a phosphoric acid fuel cell, or especially a proton exchange membrane fuel cell is suitable. In the fuel cell power generation step 8, the hydrogen gas c is supplied to the anode, and an oxygen-containing gas (05) is supplied to the cathode. An anode vent gas (07) is supplied to the anode in the fuel cell power generation step 8 and circulated through the anode for utilization, and, at the same time, a part of the anode vent gas (07) is withdrawn and is introduced into a methane adsorption step 7 for adsorbing and recovering methane. Then, the recovered methane gas (03) is returned to the gasification step 1 where methane is converted by steam reforming reaction into hydrogen and carbon monoxide. A $CH_4$ adsorbed vent gas (04) is discharged from the $CH_4$ (methane) adsorption step 7. A cathode vent gas (06) is sent to the gasification step 1 for use as a gasifying agent for combustibles a. In the case where a fluidized-bed furnace is used in the gasification step 1, the recovered methane gas (03) and/or the cathode vent gas (06) may also be utilized as a fluidizing gas.

FIG. 4 is a fundamental construction diagram of a hydrogen production system according to a first embodiment of the present invention. Combustibles a and an oxygen-containing gas 13 are supplied to a gasification step 1 where the combustibles a are pyrolyzed in the temperature range of 400 to 1400°C to produce a gas b and incombustibles 12. The produced gas b is sent to a scrubbing tower 21 in a gas scrubbing step 2. In the scrubbing tower 21, the produced gas b is brought into contact with a scrubbing water 29 to remove acid gases such as hydrogen sulfide and hydrogen chloride in the produced gas down to 10 ppm or less, preferably 1 ppm or less. The scrubbing water 29 is circulated through the scrubbing tower 21 by a circulation pump 25. In this case, the scrubbing water is cooled by means of a cooler 28 so that the temperature of the scrubbing water is constant. A part of the scrubbing water 29 is withdrawn at all times as a scrubbing wastewater 26, and, at the same time, a new scrubbing water whose amount is equal to the amount of the withdrawn scrubbing water is replenished. Here, 0.05 to 5% of sodium hydroxide is added to the scrubbing make-up water to be supplied.

The scrubbed gas 22 discharged from the scrubbing step 2 is then pressurized by a compressor 23 and is sent to a dry desulfurizer 31 in the shift reaction step 3. In the present invention, the gas is pressurized by the compressor 23 to a pressure range of 10 atmospheres or less. A compression turbine driven by high-pressure steam recovered in the gasification step may be used as the compressor 23. In the desulfurizer 31, H2S in the gas is removed down to 0.1 ppm or less, preferably 0.01 ppm or less, and the gas 32 after desulfurization is introduced into a shift reactor 33 where carbon monoxide and steam are converted at a temperature of 200 to 250°C in the presence of a shift reaction catalyst into carbon dioxide and hydrogen, whereby the concentration of carbon monoxide is lowered to 1% or less, preferably 0.5% or less. The gas 34 after the shift reaction is cooled to about 40°C by a gas cooler 35, and the condensed water is separated by a gas-water separator 36. The gas 37 from which the condensed water has been removed is sent to an absorption tower 41a in a $CO_2$ chemical absorption step 4 as a subsequent step. The gas cooler 35 employed may be either a water cooled cooler or an air cooled cooler. Further, heat of cooling may be recovered and utilized.

When the concentration of CO in the gas 32 after desulfurization is 5% or less, especially 1% or less, the amount of hydrogen produced in CO shift reaction is small. Therefore, in this case, carbon monoxide may be removed only by the methanation step 5 as a subsequent step without providing the shift reaction step 3.

In the carbon dioxide chemical absorption step 4, the gas 37 after the shift reaction is brought into contact with the absorption solution 43a after the regeneration to remove carbon dioxide down to 5000 ppm or less, preferably 1000 ppm or less. At the same time, in this step, acid gases such as hydrogen sulfide and hydrogen chloride are further removed. On the other hand, the absorption solution 43b after the absorption is led to a regeneration tower 41b via a heat exchanger 44a, and steam 48a recovered from the gasification step 1 is led to the regeneration tower 41b via a heat exchanger 44c. In the regeneration tower 41b, the absorption solution is heated by the steam to a temperature of 100 to 150°C and regenerated, and, at the same time, carbon dioxide 49 is recovered. The absorption solution 43a after the regeneration is passed by means of a feed pump 45 through the heat exchanger 44a and the gas cooler 44b and is again sent to the absorption tower 41a. In FIG. 4, the reference numeral 47 represents absorption make-up solution, and the reference numeral 48b represents condensed water.

Next, the gas 42 after the $CO_2$ absorption discharged from the carbon dioxide chemical absorption step 4 is passed through a heat exchanger 51 in the methanation step 5 and is sent to a methanation reactor 52. In the methanation reactor 52, $CO_2$ and CO in the gas react with $H_2$ by methanation reaction, whereby $CO_2$ and CO in the gas are removed down to not more than 100 ppm and not more than 10 ppm, respectively, preferably not more than 1 ppm. The gas 53 after the methanation discharged from the methanation reactor 52 is passed through the heat exchanger 51, and the gas is then passed through a gas cooler 54, a gas-water separator 55, and a dehumidifier 56, whereby water content of the gas is removed down to 100 ppm or less, preferably 10 ppm or less. Then, the gas is supplied to the hydrogen purifying step 6. Suitable dehumidifiers used herein are dehumidifiers packed with a water adsorbent, for example, dehumidifiers packed with activated alumina or silica gel.

The hydrogen purifying step 6 comprises at least two series of hydrogen-absorbing alloy containers 61a, 61b, and at least one hydrogen tank 62. The two series of the hydrogen-absorbing alloy containers perform hydrogen absorption and hydrogen desorption, respectively, and the changeover of hydrogen absorption and hydrogen desorption is carried out by crude hydrogen inlet solenoid valves 64a, 64b, refined hydrogen outlet solenoid valves 65a, 65b, and nitrogen and argon outlet solenoid valves 66a, 66b. Here, the case where hydrogen desorption is performed in the alloy container 61a and hydrogen absorption is performed in the alloy container 61b will be described.

In this case, the solenoid valve 64b is opened, and the gas 57 after the methanation is introduced into the alloy container 61b where hydrogen is absorbed at a temperature of 12 to 35°C. Cooling water 68a is introduced into a jacket of the alloy container 61b to cool and remove heat generated in hydrogen absorption. After saturation of absorption, the solenoid valve 64b is closed and the solenoid valve 66b is opened, and the hydrogen purifying step vent gas 63 containing methane, hydrogen, nitrogen, argon and a trace amount of other impurity gases accumulated in voids of the alloy packed bed of the alloy container 61b are released therefrom. On the other hand, steam 69a having a temperature of 120°C or higher and recovered in the gasification step is introduced into a jacket of the alloy container 61a where the solenoid valves 64a and 66a are closed and the solenoid valve 65a is opened, whereby hydrogen absorbed in the hydrogen-absorbing alloy is released and the released refined hydrogen 67a is supplied to a consuming place such as a fuel cell via the hydrogen tank 62. The purity and pressure of the purified hydrogen gas 67a and 67b are 99.9% or more and 2 atmospheres or more, respectively. In FIG. 4, the reference numeral 68b represents cooling water discharged from the jacket of the alloy container 61b, and the reference numeral 69b represents steam discharged from the jacket of the alloy container 61a.

Next, the discharged hydrogen purifying step vent gas 63 is sent to an adsorption tower 71 in the methane adsorption step 7. In the methane adsorption step 7, a pressure swing method (PSA method) is used to adsorb and separate a methane gas. The separated methane gas 74 is returned by a blower 73 to the gasification step 1 where methane is again reformed into hydrogen and carbon monoxide. On the other hand, a methane adsorption step vent gas 72 may be used as an instrumentation gas or a purge gas for the system.

FIG. 5 is a fundamental construction diagram showing the hydrogen production system according to the second embodiment of the present invention. As with the hydrogen production system shown in FIG. 4, combustibles a and an oxygen-containing gas 13 are supplied to a gasification step 1 to produce a gas b. The produced gas b is then successively processed in a scrubbing step 2, a shift reaction step 3, a $CO_2$ chemical absorption step 4, a methanation step 5, and a hydrogen purifying step 6 to produce a purified hydrogen gas 67b.

In this embodiment, a discharged hydrogen purifying step vent gas 63 is combusted together with the oxygen-containing gas 82, and heat produced by the combustion is recovered by a boiler 92. As shown in FIG. 5, a burner 91 is used for the combustion. The burner per se may be installed within the boiler. In FIG. 5, the reference numeral 93 represents a combustion gas.

FIG. 6 is a fundamental construction diagram of a first aspect of a fuel cell power generation system according to the third embodiment of the present invention. The purified hydrogen gas 67b described above in connection with the first embodiment is supplied to an anode compartment of a fuel cell stack 81 in the fuel cell power generation step 8 to generate electricity. In this embodiment, an anode vent gas 84 discharged from the anode compartment in the stack 81 is circulated through an ejector 87 into the anode compartment in the stack 81. In this embodiment and the fourth embodiment (described later), the ejector 87 is used as means for circulating the anode vent gas 84 into the anode compartment in the stack 81. However, it should be noted that a blower or a compressor may be used instead of the ejector 87. Cooling water 86a for the stack 81 is introduced into the jacket of the alloy container 61a in the hydrogen purifying step 6 to heat the hydrogen-absorbing alloy after the hydrogen absorption, thereby releasing purified hydrogen 67a. On the other hand, stack cooling water 86b discharged from the jacket of the alloy container 61a is circulated into the stack 81 for cooling the stack 81 again. As an example of the stack cooling temperature and the hydrogen release temperature of the hydrogen-absorbing alloy, the temperature of stack cooling water 86a (outlet) discharged from the fuel cell stack 81, i.e. the temperature of hot water at the inlet of the jacket of the hydrogen-absorbing alloy container 61a is 75°C, and the temperature of stack cooling water 86b (inlet), i.e. the temperature of hot water at the outlet of the jacket of the hydrogen-absorbing alloy container 61a is 70°C. An oxygen-containing gas 82 is supplied by a blower 83 to the cathode compartment of the fuel cell stack 81. The reference numeral 88 represents power output obtained in the power generation. A cathode vent gas 85 discharged from the cathode compartment in the stack 81 is sent to the gasification step 1 for use as a gasifying agent and/or a fluidizing gas for combustibles a.

According to the third embodiment, in the $CO_2$ chemical absorption step 4, instead of the absorption solution regeneration method using steam described above in connection with the first embodiment, the following method may be employed: The absorption solution 43b discharged from the heat exchanger 44a is heated to a temperature of 50 to 80°C by using a part or whole of stack waste heat 86a obtained in a fuel cell power generation step (described later), and a part or whole of a cathode vent gas 85 is introduced as a regeneration gas into the absorption tower 41b from its bottom.

When the total concentration of $N_2$ and Ar in the gas after the methanation step is less than 10%, as shown in FIG. 7 showing the fourth embodiment of the present invention, a fuel cell power generation system which dispenses with the hydrogen purifying step can be realized. In this case, combustibles a and an oxygen-containing gas 13 are supplied to a gasification step 1. The resultant produced gas b is successively processed, in the same manner as the embodiment shown in FIG. 6, in a gas scrubbing step 2, a shift reaction step 3, a carbon dioxide chemical absorption step 4, and a methanation step 5, and the processed gas is then sent to a hydrogen tank 62. The hydrogen gas is then supplied directly to a fuel cell power generation step 8 without subjecting to the hydrogen purifying step.

In the fuel cell power generation step 8, the purified hydrogen gas 67b is supplied to the anode compartment of the fuel cell stack 81 to generate electricity. In this embodiment, an anode vent gas 84 discharged from the anode compartment in the stack 81 is circulated through an ejector 87 into the anode compartment in the stack 81, and a part of the anode vent gas is always withdrawn and is sent to an adsorption tower 71 in the methane adsorption step 7. In the methane adsorption step 7, a pressure swing method (PSA method) is used to adsorb and separate a methane gas. The separated methane gas 74 is returned by a blower 73 to the gasification step 1 where methane is again reformed into hydrogen and carbon monoxide. On the other hand, a methane adsorption step vent gas 72 may be used as an instrumentation gas or a purge gas for the system. An oxygen-containing gas 82 is supplied by a blower 83 to the cathode compartment of the fuel cell stack 81. The reference numeral 88 represents power output obtained in the power generation. A cathode vent gas 85 discharged from the cathode compartment in the stack 81 is sent to the gasification step 1 for use as a gasifying agent for combustibles a. In the case where a fluidized-bed furnace is used in the gasification step 1, the separated methane gas 74 and/or the cathode vent gas 85 are also utilized as a fluidizing gas.

Next, the gasification step of the present invention will be described in detail with reference to FIGS. 8 through 11.

FIG. 8 is a schematic view showing an apparatus for carrying out the gasification step according to a first embodiment of the present invention. As shown in FIG. 8, combustibles a are supplied through a raw material feeder 201 to a low-temperature gasification furnace 202 as a fluidized-bed gasification furnace where the combustibles a are pyrolyzed with oxygen ($O_2$) being supplied thereto in the temperature range of 400 to 1000°C to produce gas containing hydrogen and carbon monoxide as a gas component useful for fuel cell power generation, and a trace amount of hydrocarbons. In this case, raising the temperature from temperature at the time of the introduction of the combustibles to the temperature in the range of 400 to 1000°C is carried out by partial combustion of the combustibles a. Incombustibles contained in the combustibles a are discharged from the gasification furnace 202. The low-temperature gasification furnace may be a fluidized-bed furnace, or alternatively may be a rotary kiln, a stoker furnace or the like. When combustibles, such as municipal wastes, which have irregular shapes and contain incombustibles are used as the raw material, it is desirable to use the fluidized-bed furnace. This is because in the fluidized-bed furnace, unburned material does not adhere to the incombustibles to be discharged from the furnace, thus being less likely to pose a problem of the treatment and disposal of incombustibles. Further, when the fluidized-bed furnace is adopted, the bed temperature is preferably low so far as pyrolysis is not obstructed. Specifically, the furnace is preferably operated at a temperature of 400 to 600°C because the incombustibles are not oxidized and thus can be easily reutilized.

The produced gas and a solid component such as ash content discharged from the low-temperature gasification furnace 202 are supplied to a dust collector 203. At this time, the inlet temperature of the dust collector is kept at 400 to 650°C. In a downstream portion of the low-temperature gasification furnace 202, i.e., in a freeboard portion, the gas temperature is lower than that in the fluidized-bed portion due to the progress of pyrolytic endothermic reaction. Therefore, even if the fluidized-bed temperature is 950°C, there is a possibility that the gas temperature in the freeboard portion becomes a temperature lower than 650°C. When the gas temperature is high, a radiation boiler may be provided. On the other hand, when the gas temperature is 400°C or below, air or oxygen may be supplied to the freeboard portion to raise the gas temperature, thereby avoiding tar troubles. A cyclone may be used as a dust collector. It is, however, desirable that a filter system having high dust-collecting performance is adopted. In the temperature range of 400 to 650°C, a high-temperature bag filter may be used as a dust collector. Alternatively, a ceramic filter or the like which is rapidly under development may be used. The produced gas b, from which solid components such as ash and alkali metal salts have been removed in the dust collector 203, is supplied into the gas processing step.

FIGS. 9 and 10 are schematic views showing an apparatus for carrying out the gasification step according to a second embodiment of the present invention. FIGS. 9 and 10 show an embodiment in which combustibles having a high calorific value such as waste plastics are used as a raw material. Combustibles a are supplied through a raw material feeder 201 to a low-temperature gasification furnace 202, pyrolyzed and gasified at a temperature of 400 to 1000°C in a low-temperature gasification furnace 202 to produce gas, and the produced gas is supplied into a high-temperature gasification furnace 215. In the high-temperature gasification furnace 215, the produced gas is further gasified at a temperature of 1000 to 1500°C to reduce the molecular weight of the produced gas. The high-temperature gasification furnace 215 is kept at the melting temperature of ash content contained in the produced gas or higher. Thus, 80 to 90% of the ash content contained in the produced gas is slagged, and the slag is discharged as molten slag 226 to the outside of the system. The organic matter and hydrocarbons contained in the produced gas are completely decomposed in the high-temperature gasification furnace into hydrogen, carbon monoxide, steam, and carbon dioxide. The gas produced in the high-temperature gasification furnace 215 is then cooled to 650°C or below in a waste heat boiler 219 comprising a radiation boiler to solidify molten alkali metal salts. The alkali metal salts after the solidification are collected by means of a dust collector 203. On the other hand, steam produced in the waste heat boiler 219 is supplied to a steam turbine to recover power.

The produced gas after the complete decomposition of the organic matter and the removal of the solid matter is led to the gas processing step. In the gasification step shown in FIGS. 9 and 10, the high-temperature gasification furnace 215 has two functions for fuel reforming and slagging of ash. This process has a great advantage that ash can be slagged and then withdrawn separately from alkali metal salts and metals having a low melting point, thereby contributing to a reduction of the problem of ash disposal.

FIG. 9 shows typical configuration of main constituent apparatuses constituting the second embodiment. The low-temperature gasification furnace 202 is a cylindrical fluidized-bed furnace having a revolving flow, i.e. an internally circulating flow of a fluidized medium therein, and has an enhanced ability of materials to be diffused within the furnace for thereby realizing stable gasification. An oxygen-free gas is supplied into the central part of the interior of the furnace wherein a fluidized medium moves downward, while an oxygen-containing gas is supplied into the peripheral part of the furnace. This permits char produced within the low-temperature gasification furnace to be selectively combusted, contributing to an improvement in conversion rate of carbon and cold gas efficiency. The high-temperature gasification furnace 215 is a swirling-type slagging combustion furnace.

The cylindrical fluidized-bed furnace shown in FIG. 9 will be described in more detail. A conical distributor plate 206 is disposed at the bottom of the cylindrical fluidized-bed furnace. A fluidizing gas supplied through the distributor plate 206 comprises a central fluidizing gas 307 which is supplied from a central portion 304 of the bottom to the interior of the furnace as an upward flow, and a peripheral fluidizing gas 308 which is supplied from a peripheral portion 303 of the bottom to the interior of the furnace as an upward flow.

The central fluidizing gas 307 comprises an oxygen-free gas, and the peripheral fluidizing gas 308 comprises an oxygen-containing gas. The total amount of oxygen in all of the fluidizing gas is set to be 10% or higher and 30% or lower of the theoretical amount of oxygen required for combustion of combustibles. Thus, the interior of the furnace is kept in a reducing atmosphere.

The mass velocity of the central fluidizing gas 307 is set to be smaller than that of the peripheral fluidizing gas 308. The upward flow of the fluidizing gas in an upper peripheral region of the furnace is deflected toward a central region of the furnace by a deflector 306. Thus, a moving bed 309 in which the fluidized medium (silica sand is used) are moved downward and diffused on the distributor plate is formed in the central region of the furnace. In the peripheral region of the furnace, a fluidized bed 310 in which the fluidized medium is actively fluidized is formed. As indicated by the arrows 218, the fluidized medium ascends in the fluidized bed 310 in the peripheral region of the furnace, is deflected by the deflector 306 to an upper portion of the moving bed 309, and descends in the moving bed 309. Then, as indicated by the arrows 212, the fluidized medium moves along the fluidizing gas distributor plate 206 and moves into a lower portion of the fluidized bed 310. In this manner, the fluidized medium circulates (swirls) in the fluidized bed 310 and the moving bed 309 as indicated by the arrows 218, 212.

While the combustibles a supplied to the upper portion of the moving bed 309 by a raw material feeder 201 descend together with the fluidized medium in the moving bed 309, the combustibles are volatilized with heating by the fluidized medium. Because there is no or little oxygen available in the moving bed 309, the pyrolysis gas (produced gas) produced by the gasification, which comprises volatile matter, is not combusted and passes through the moving bed 309 as indicated by the arrows 216. Consequently, the moving bed 309 forms a gasification zone G. The produced gas moves into a freeboard 207 as indicated by the arrow 220, and is discharged from a gas outlet 208 as a produced gas g.

Char (fixed carbon) and tar produced in the moving bed 309 which are not gasified move together with the fluidized medium from the lower portion of the moving bed 309 to the lower portion of the fluidized bed 310 in the peripheral region of the furnace as indicated by the arrows 212, and are partially oxidized by the peripheral fluidizing gas 308 having a relatively large oxygen concentration. Consequently, the fluidized bed 310 forms an oxidization zone S of the combustibles. In the fluidized bed 310, the fluidized medium is heated by the heat of combustion in the fluidized bed. The fluidized medium heated to a high temperature is turned over by the deflector 306 as indicated by the arrows 218, and transferred to the moving bed 309 where it serves as a heat source for gasification. In this manner, the fluidized bed is kept at a temperature ranging from 400 to 1000°C, preferably from 400 to 600°C, thus continuing controlled combustion reaction. A ring-shaped incombustible discharge port 305 is formed at the peripheral portion of the bottom of the fluidized-bed gasification furnace for discharging the incombustibles.

According to the fluidized-bed gasification furnace shown in FIG. 9, the gasification zone G and the oxidization zone S are formed in the fluidized bed, and the fluidized medium circulates in both zones. Because the fluidized medium serves as a heat transfer medium, good quality combustible gas having a high heating value is generated in the gasification zone G, and char and tar which are difficult to be gasified is combusted efficiently in the oxidization zone S. Consequently, gasification efficiency of combustibles such as wastes can be improved and the produced gas having a good quality can be generated. This fluidized-bed gasification furnace is the best suited as the low-temperature gasification furnace in the first to third embodiments. The low-temperature gasification furnace is not limited to the cylindrical fluidized-bed furnace, and, as with the above embodiments, a kiln-type or stoker-type furnace may be adopted.

Next, the swirling-type slagging combustion furnace will be described in more detail. The high-temperature gasification furnace 215 includes a cylindrical primary gasification chamber 215a having a substantially vertical axis, a secondary gasification chamber 215b which is slightly inclined to the horizontal direction, and a tertiary gasification chamber 215c disposed downstream of the secondary gasification chamber 215b and having a substantially vertical axis. A slag discharge port 242 is provided between the secondary gasification chamber 215b and the tertiary gasification chamber 215c. Up to the slag discharge port 242, most of ash content is slagged and discharged through the slag discharge port 242. The produced gas is supplied into the swirling-type slagging combustion furnace in the tangential direction so that a swirling flow of the gas is created within the primary gasification chamber 215a. The produced gas supplied into the swirling-type slagging combustion furnace forms a swirling flow, and solid matter contained in the gas is trapped on the circumferential inner wall surface under a centrifugal force. Therefore, advantageously, the percentage of slagging and the percentage of slag collection are high, and slag mist is less likely to be scattered.

Oxygen is supplied into the swirling-type slagging combustion furnace through a plurality of nozzles 234 so as to properly maintain the temperature distribution in the furnace. The temperature distribution is regulated so that the decomposition of hydrocarbons and the slagging of ash are completed in the primary gasification chamber 215a and the secondary gasification chamber 215b. When oxygen is solely supplied, for example, there is a fear of a nozzle being burned. Therefore, oxygen is diluted with steam or the like before supplying, as necessary. Further, steam contributes to steam reforming to reduce the molecular weight of hydrocarbons, and thus should be supplied in a satisfactory amount. This is because the interior of the furnace has a high temperature, and when the amount of the steam is insufficient, condensation polymerization takes place to produce graphite having very low reactivity which is causative of unburned fuel loss.

The slag flows down on the lower surface of the secondary gasification chamber 215b, and is discharged as molten slag 226 through the slag discharge port 242. The tertiary gasification chamber 215c serves as a buffer zone which prevents the slag discharge port 242 from being cooled by radiational cooling from a waste heat boiler provided downstream of the tertiary gasification chamber 215c, and serves to reduce the molecular weight of the undecomposed gas. An exhaust port 244 for discharging produced gas is provided at the upper end of the tertiary gasification chamber 215c, and a radiation plate 248 is provided on the lower part of the tertiary gasification chamber 215c. The radiation plate 248 serves to reduce the quantity of heat emitted through the exhaust port 244 by radiation. Reference numeral 232 denotes a start-up burner, and reference numeral 236 denotes a stabilizing burner. Organic matter and hydrocarbons contained in the produced gas are completely decomposed in the high-temperature gasification furnace into hydrogen, carbon monoxide, steam, and carbon dioxide. The gas produced in the high-temperature gasification furnace 215 is discharged from the exhaust gas port 244, and then is cooled to 650°C or below in the waste heat boiler 219 comprising a radiation boiler as shown in FIG. 10 to solidify molten alkali metal salts. The alkali metal salts after the solidification are then collected by the dust collector 203. The high-temperature gasification furnace is not limited to this swirling-type slagging combustion furnace, and may be of other gasification furnace type.

FIG. 11 is a schematic view showing an apparatus for carrying out the gasification step according to a third embodiment of the present invention. The third embodiment shown in FIG. 11 is an embodiment in which the configuration of the high-temperature gasification furnace has been modified to a configuration which is advantageous for the discharge of the slag. Specifically, the high-temperature gasification furnace 215 has a two-stage construction, upper-stage and lower-stage furnaces. The produced gas flows into the upper-stage furnace of the high-temperature gasification furnace 215 and flows towards the lower-stage furnace. In this case, the gas flows also in a direction in which slag drops by gravity. Therefore, the flow is smooth, and clogging troubles are less likely to occur at the slag discharge port. A waste heat boiler 219 comprising the radiation boiler is provided on the lower-stage side of the high-temperature gasification furnace 215. The other construction is the same as that of the second embodiment shown in FIG. 10.

As described above, according to the present invention, combustibles can be gasified to produce gas, and the produced gas can be utilized to produce high quality hydrogen gas suitable for a fuel cell power generation at a low cost and with high efficiency. Further, the produced hydrogen gas is utilized to perform fuel cell power generation efficiently.

Next, embodiments of the fuel cell power generation system according to the present invention will be described with reference to FIGS. 12 and 13. In FIGS. 12 and 13, identical or corresponding steps or members are identified with the same reference numerals to avoid the repetition of the explanation.

FIG. 12 is a schematic diagram showing the fuel cell power generation system according to the second aspect of the present invention. As shown in FIG. 12, in the fuel cell power generation system of the present invention, combustibles a are gasified in a gasification step 101, and the resultant produced gas b is processed in a gas processing step composed of steps 102 to 105 and 107 to produce a hydrogen-containing gas c which is then supplied to a fuel cell power generation step 106 to generate electricity.

The gas processing step comprises a gas scrubbing step 102 for absorbing and removing dust and a trace amount of acid gases such as hydrogen chloride and hydrogen sulfide by bringing the produced gas obtained in the gasification step 1 into contact with water or alkaline solution; a shift reaction step 103 for adsorbing and removing the acid gases in the gas after the scrubbing step, and then converting carbon monoxide in the gas after the scrubbing step into hydrogen gas and carbon dioxide by catalytically reacting carbon monoxide with steam; a selective oxidation step 104 for selectively oxidizing the residual carbon monoxide in the gas after the shift reaction by catalytically reacting the residual carbon monoxide with an oxygen-containing gas; and a carbon dioxide chemical absorption step 105 for absorbing and separeting carbon dioxide in the gas after the selective oxidation step by bringing the gas into contact with alkaline absorption solution. In the carbon dioxide chemical absorption step 105, $CO_2$ gas (011) is removed.

In the fuel cell power generation step 106, the hydrogen-containing gas c obtained in the carbon dioxide chemical absorption step 105 is supplied as a fuel gas to the anode in the fuel cell stack while an oxygen-containing gas (051) is supplied as an oxidizing agent gas to the cathode in the fuel cell stack, thereby generating electricity. Next, an anode vent gas (021) discharged from the fuel cell power generation step 106 is introduced into a membrane separation step 107 where hydrogen is selectively passed through the membrane and the permeated gas (031) is returned to the shift reaction step 103. A membrane separation vent gas (041) is discharged from the membrane separation step 107. Further, a cathode vent gas (061) discharged from the fuel cell stack is sent to the gasification step 101 for use as a gasifying agent and/or a fluidizing gas for combustibles.

FIG. 13 is a fundamental construction diagram of a fuel cell power generation system according to an embodiment of a second aspect of the present invention. Combustibles a and an oxygen-containing gas 113 are supplied to a gasification step 101 where the combustibles a are pyrolyzed in the temperature range of 400 to 1400°C to produce a gas b and incombustibles 112. The produced gas b is sent to a scrubbing tower 121 in a gas scrubbing step 102. In the scrubbing tower 121, the produced gas b is brought into contact with scrubbing water 129 to remove acid gases such as hydrogen sulfide and hydrogen chloride in the produced gas down to 10 ppm or less, preferably 1 ppm or less. The scrubbing water 129 is circulated into the scrubbing tower 121 by a circulation pump 125. In this case, the scrubbing water is cooled by means of a cooler 128 so that the scrubbing water temperature is constant. In addition, a part of the scrubbing water 129 is always withdrawn as a scrubbing wastewater 126, and, at the same time, the same amount of fresh scrubbing make-up water 127 is supplied. Here, 0.05 to 5% of caustic soda is added to the scrubbing make-up water to be supplied.

The scrubbed gas 122 discharged from the scrubbing step 102 is then pressurized by a compressor 123 and is sent to a dry desulfurizer 131 in the shift reaction step 103. In the present invention, the gas is pressurized by the compressor 123 to not more than 10 atmospheres. A compression turbine driven by high-pressure steam recovered in the gasification step 101 may be used as the compressor 123. In the desulfurizer 131, the concentration of H2S in the gas is removed down to 0.1 ppm or less, preferably 0.01 ppm or less, and the gas 132 after desulfurization is introduced into a shift reactor 133 where carbon monoxide and steam are converted at a temperature of 200 to 250°C in the presence of a conversion catalyst into carbon dioxide and hydrogen, whereby the concentration of carbon monoxide is lowered to 1% or less, preferably 0.5% or less.

Next, the gas 134 after the shift reaction is cooled by means of a gas cooler 135 to about 150°C, and the cooled gas is then led to a selective oxidation reactor 141 in a selective oxidization step 104 where the residual CO in the gas is selectively oxidized by the introduced oxygen-containing gas 145 to lower the concentration of CO to 100 ppm or less, preferably 10 ppm or less, more preferably 1 ppm or less. The excess oxygen is removed by a catalytic combustion reaction with hydrogen down to not more than 10 ppm. The gas 142 after the selective oxidation is cooled by a gas cooler 143 to about 40°C, and the condensed water is separated by a gas-water separator 144. The gas from which the condensed water has been removed is sent to an absorption tower 151a in a $CO_2$ chemical absorption step 105 as a next step. The gas cooler 135, 143 employed may be either a water cooled cooler or an air cooled cooler. Further, heat of cooling may be recovered and utilized.

In the carbon dioxide chemical absorption step 105, the gas after the shift reaction is brought into contact with the absorption solution 153a after the regeneration to remove carbon dioxide down to 0.5% or less, preferably 0.1% or less. At the same time, in this step, acid gases such as hydrogen sulfide and hydrogen chloride are further removed. On the other hand, the absorption solution 153b after the absorption is passed through a heat exchanger 154a and is led to a regeneration tower 151b. In the regeneration tower 151b, the absorption solution is heated in a heat exchanger 154c by steam 158a recovered from the gasification step 101 to 100 to 150°C and is regenerated, and, at the same time, carbon dioxide 159 is recovered. The condensed water 158b from the heat exchanger 154c is returned to a steam boiler (not shown) provided in the gasification step. The absorption solution 153a after the regeneration is passed by means of a feed pump 155 through the heat exchanger 154a and the gas cooler 154b, and is again sent to the absorption tower 151a. In FIG. 13, the reference numeral 157 represents absorbing make-up solution.

Next, a gas 152 after $CO_2$ absorption discharged from the carbon dioxide chemical absorption step 105 is supplied as a fuel gas 165 to the anode compartment in the fuel cell stack 161 in the fuel cell power generation step 106 while air 162 is supplied through an air blower 163 to the cathode compartment in the stack 161, thereby generating electricity. The reference numeral 167 represents power output obtained in the power generation.

In this embodiment, a cathode vent gas 164 discharged from the cathode compartment in the stack 161 may be sent to the gasification step 1 for use as a gasifying agent and/or a fluidizing gas. An anode vent gas 166 discharged from the anode compartment in the stack 161 is pressurized by means of a compressor 171 in the membrane separation step 107, and the pressurized gas is then led to a membrane separation module 172 where hydrogen and steam are selectively passed through the membrane. The permeated gas 173 is returned to the suction port of the compressor 123, thereby recovering the gas 173. On the other hand, a membrane separation step vent gas 174 may be used as an instrumentation gas or a purge gas for the present system.

Next, embodiments of the fuel cell power generation system according to the second embodiment of the present invention will be described with reference to FIGS. 14 and 15. In FIGS. 14 and 15, identical or corresponding steps or members are identified with the same reference numerals to avoid the repetition of the explanation.

FIG. 14 is a schematic diagram showing the fuel cell power generation system according to the third aspect of the present invention. As shown in FIG. 14, in the fuel cell power generation system of the present invention, combustibles a are gasified in a gasification step 101A, and the resultant produced gas b is processed in a gas processing step composed of steps 102A to 105A and 107A to produce a hydrogen-containing gas c which is then supplied to a fuel cell power generation step 106A to generate electricity.

The gas processing step comprises a gas scrubbing step 102A for absorbing and removing dust and a trace amount of acid gases such as hydrogen chloride and hydrogen sulfide by bringing the produced gas obtained in the gasification step 101A into contact with water or alkaline solution; a carbon dioxide chemical absorption step 103A for absorbing and separating carbon dioxide in the gas after the scrubbing step by bringing the gas into contact with alkaline absorption solution; a shift reaction step 104A for adsorbing and removing the acid gases in the gas after the absorbing and separating step, and then converting carbon monoxide in the gas after the absorption and separation into hydrogen gas and carbon dioxide by catalytically reacting carbon monoxide with steam; and a selective oxidation step 105A for selectively oxidizing the residual carbon monoxide in the gas after the shift reaction by catalytically reacting the residual carbon monoxide with an oxygen-containing gas.

In the fuel cell power generation step 106A, the hydrogen-containing gas c obtained in the selective oxidation step 105A is supplied as a fuel gas to the anode in the fuel cell stack while an oxygen-containing gas (051) is supplied as an oxidizing agent gas to the cathode in the fuel cell stack, thereby generating electricity. Next, an anode vent gas (021) discharged from the fuel cell power generation step 106A is introduced into a membrane separation step 107A where hydrogen is selectively passed through the membrane, and the permeated gas (031) is returned to the carbon dioxide chemical absorption step 103A. A membrane separation vent gas (041) is discharged from the membrane separation step 107A. Further, a cathode vent gas (061) discharged from the fuel cell stack is sent to the gasification step 101A for use as a gasifying agent and/or a fluidizing gas for combustibles.

FIG. 15 is a fundamental construction diagram of a fuel cell power generation system according to an embodiment of a third aspect of the present invention. Combustibles a and an oxygen-containing gas 113 are supplied to a gasification step 101A where the combustibles a are pyrolyzed in the temperature range of 400 to 1400°C to produce a gas b and incombustibles 112. The produced gas b is sent to a scrubbing tower 121 in a gas scrubbing step 102A. In the scrubbing tower 121, the produced gas b is brought into contact with scrubbing water 129 to remove acid gases such as hydrogen sulfide and hydrogen chloride in the produced gas down to 10 ppm or less, preferably 1 ppm or less. The scrubbing water 129 is circulated into the scrubbing tower 121 through a circulation pump 125. In this case, the scrubbing water is cooled by means of a cooler 128 so that the scrubbing water temperature is constant. In addition, a part of the scrubbing water 129 is always withdrawn as a scrubbing wastewater 126, and, at the same time, the same amount of fresh scrubbing make-up water 127 is supplied. Here, 0.05 to 5% of caustic soda is added to the scrubbing make-up water to be supplied. The scrubbed gas 122 discharged from the scrubbing step 102A is then pressurized by a compressor 123 and is sent to a absorbing tower 131a in the carbon dioxide chemical absorption step 103A. In the present invention, the gas is pressurized by the compressor 123 to not more than 10 atmospheres. A compression turbine driven by high-pressure steam recovered in the gasification step may be used as the compressor 123.

In the carbon dioxide chemical absorption step 103A, the scrubbed gas 122 is brought into contact with the absorption solution 133a after the regeneration to remove carbon dioxide down to 0.5% or less, preferably 0.1% or less. At the same time, in this step, acid gases such as hydrogen sulfide and hydrogen chloride are further removed. On the other hand, the absorption solution 133b after the absorption is passed through a heat exchanger 134a and is led to a regeneration tower 131b. In the regeneration tower 131b, the absorption solution is heated by steam 138a recovered from the gasification step 101A to 100 to 150°C and is regenerated, and, at the same time, carbon dioxide 139 is recovered. The absorption solution 133a after the regeneration is passed by means of a feed pump 135 through the heat exchanger 134a and the gas cooler 134b, and is again sent to the absorption tower 131a.

The gas 132a after $CO_2$ absorption discharged from the carbon dioxide chemical absorption step 103A is sent to a desulfurizer 141a in the shift reaction step 104A. In the desulfurizer 141a, the concentration of $H_2S$ in the gas is removed down to 0.1 ppm or less, preferably 0.01 ppm or less, and the gas 142a after desulfurization is introduced into a shift reactor 143a where carbon monoxide and steam are converted at a temperature of 200 to 250°C in the presence of a conversion catalyst into carbon dioxide and hydrogen, whereby the concentration of carbon monoxide is lowered to 1% or less, preferably 0.5% or less. Next, a gas 144a after the shift reaction is cooled by means of a gas cooler 145a to about 150°C, and the cooled gas is then led to a selective oxidation reactor 151 in a selective oxidization step 105A where the residual CO in the gas is selectively oxidized by the introduced oxygen-containing gas 155a to lower the concentration of CO to 100 ppm or less, preferably 10 ppm or less, more preferably 1 ppm or less. The excess oxygen is removed by a catalytic combustion reaction with hydrogen down to not more than 10 ppm. The gas 152a after the selective oxidation is cooled to about 80°C by a gas cooler 153, and the condensed water is separated by a gas-water separator 154. The gas from which the condensed water has been removed is sent to a fuel cell power generation step 106A. The gas coolers 145a, 153 employed may be either a water cooled cooler or an air cooled cooler. Further, heat of cooling may be recovered and utilized.

Next, the gas 152a after selective oxidation is supplied as a fuel gas 165 to the anode compartment in the fuel cell stack 161 in the fuel cell power generation step 106A while air 162 is supplied by an air blower 163 to the cathode compartment in the stack 161, thereby generating electricity. In this embodiment, a cathode vent gas 164 discharged from the cathode compartment in the stack 161 may be sent to the gasification step 101A for use as a gasifying agent and/or a fluidizing gas. An anode vent gas 166 discharged from the anode compartment in the stack 161 is pressurized by means of a compressor 171 in the membrane separation step 107A, and the pressurized gas is then led to a membrane separation module 172 where hydrogen and steam are selectively passed through the membrane. The permeated gas 173 is returned to the suction port of the compressor 123, thereby recovering the gas 173. On the other hand, a membrane separation step vent gas 174 may be used as an instrumentation gas or a purge gas for the present system.

As is apparent from the foregoing description, according to the present invention, combustibles can be gasified to produce gas, and a high-quality hydrogen-containing gas suitable for fuel cell power generation can be obtained from the produced gas at low cost with high efficiency. The produced hydrogen-containing gas can be used for fuel cell power generation with high efficiency.

**Industrial Applicability**

The present invention relates to an energy conversion technique for converting chemical energy of combustibles to electric energy with high efficiency. The present invention can be utilized in a system in which combustibles such as combustible wastes or coal are gasified to produce gas, and the produced gas is utilized to produce hydrogen gas. The produced hydrogen gas can be utilized in a power generation system in which the hydrogen gas is used as a fuel gas for a fuel cell to generate electricity.

**Claims**

1. A hydrogen production method by gasification of combustibles, said method comprising a gasification step for gasifying combustibles and a gas processing step for producing hydrogen by refining the gas produced in said gasification step, said gas processing step comprising:

   a methanation step for reacting carbon dioxide and carbon monoxide in the gas produced in said gasification step with hydrogen to convert carbon dioxide and carbon monoxide into methane.

2. A hydrogen production method by gasification of combustibles according to claim 1, wherein in said gasification step, combustibles are pyrolyzed and gasified in a low-temperature gasification furnace, and the produced gas is further gasified in a high-temperature gasification furnace.

3. A hydrogen production method by gasification of combustibles according to claim 2, wherein said low-temperature gasification furnace comprises a fluidized-bed furnace which has a moving bed in which a fluidized medium is moved downward and diffused, and a fluidized-bed in which the fluidized medium is actively fluidized.

4. A hydrogen production method by gasification of combustibles according to any one of claims 1 to 3, wherein said combustibles are combustible wastes.

5. A power generation method by gasification of combustibles for generating electricity by supplying hydrogen produced by a hydrogen production step to a fuel cell, said hydrogen production step comprising a gasification step for gasifying combustibles and a gas processing step for producing said hydrogen by refining the gas produced in said gasification step, said gas processing step comprising:

   a methanation step for reacting carbon dioxide and carbon monoxide in the gas produced in said gasification step with hydrogen to convert carbon dioxide and carbon monoxide into methane.

6. A power generation method by gasification of combustibles according to claim 5, wherein in said gasification step, combustibles are pyrolyzed and gasified in a low-temperature gasification furnace, and the produced gas is further gasified in a high-temperature gasification furnace.

7. A power generation method by gasification of combustibles according to claim 6, wherein said low-temperature gasification furnace comprises a fluidized-bed furnace which has a moving bed in which a fluidized medium is moved downward and diffused, and a fluidized-bed in which the fluidized medium is actively fluidized.

8. A power generation method by gasification of combustibles according to any one of claims 5 to 7, wherein said combustibles are combustible wastes.

9. A power generation method by gasification of combustibles according to any one of claims 5 to 8, wherein an anode vent gas in said fuel cell is supplied to an anode to be circulated and utilized.

10. A power generation method by gasification of combustibles according to any one of claims 5 to 9, wherein a methane adsorption step is provided for adsorbing and recovering methane from an anode vent gas in said fuel cell and the recovered methane gas is returned to said gasification step.

11. A power generation method by gasification of combustibles according to any one of claims 5 to 10, wherein a cathode vent gas in said fuel cell is sent to said gasification step for use as a gasifying agent and/or a fluidizing gas for combustibles.

12. A power generation method by gasification of combustibles according to any one of claims 5 to 11, wherein said fuel cell used in said fuel cell power generation step comprises a proton exchange membrane fuel cell or a phosphoric acid fuel cell.

13. A hydrogen production method by gasification of combustibles, said method comprising a gasification step for gasifying combustibles and a gas processing step for producing hydrogen by refining the gas produced in said gasification step, said gas processing step comprising:

a gas scrubbing step for absorbing and removing dust and a trace amount of acid gases such as hydrogen chloride and hydrogen sulfide in the produced gas obtained in said gasification step by bringing the produced gas into contact with water or alkaline solution;
a shift reaction step for converting carbon monoxide in the produced gas, which has been scrubbed in said gas scrubbing step, into hydrogen gas and carbon dioxide by catalytically reacting carbon monoxide with steam;
a carbon dioxide chemical absorption step for absorbing and separating carbon dioxide in the produced gas after said shift reaction step by bringing the produced gas into contact with alkaline absorption solution;
a methanation step for catalytically reacting the residual carbon dioxide and carbon monoxide in the gas after said carbon dioxide chemical absorption step with hydrogen to convert carbon dioxide and carbon monoxide into methane; and
a hydrogen purifying step using hydrogen-absorbing alloy for separating methane, nitrogen and argon in the produced gas and refining hydrogen gas, after dehumidifying the produced gas after said methanation step.

14. A hydrogen production method by gasification of combustibles according to claim 13, wherein a methane adsorption step is provided for adsorbing and recovering methane from a vent gas after said hydrogen purifying step and the recovered methane gas is returned to said gasification step where methane is converted by steam reforming reaction into hydrogen and carbon monoxide.

15. A power generation method by gasification of combustibles, wherein the hydrogen gas produced by the method according to claim 13 or 14 is supplied as a fuel gas to an anode of a fuel cell and an anode vent gas in said fuel cell is supplied to said anode to be circulated and utilized.

16. A power generation method by gasification of combustibles according to claim 15, wherein a cathode vent gas in the fuel cell is sent to said gasification step for use as a gasifying agent and/or a fluidizing gas for combustibles.

17. A power generation method by gasification of combustibles according to claim 15 or 16, wherein exhaust heat recovered by the cooling of said fuel cell is utilized as a heat source for hydrogen desorption in said hydrogen-absorbing alloy according to claim 13.

18. A power generation method by gasification of combustibles according to claim 15, 16 or 17, wherein said fuel cell used in said fuel cell power generation step comprises a proton exchange membrane fuel cell or a phosphoric acid fuel cell.

19. A hydrogen production apparatus by gasification of combustibles, said apparatus comprising a gasification furnace for gasifying combustibles and a gas processing apparatus for producing hydrogen by refining the gas produced in said gasification furnace, said gas processing apparatus comprising:

a scrubbing tower for absorbing and removing dust and a trace amount of acid gases such as hydrogen chloride and hydrogen sulfide in the produced gas obtained in said gasification furnace by bringing the produced gas into contact with water or alkaline solution;

a shift reactor packed with a shift reaction catalyst for converting carbon monoxide in the produced gas, which has been scrubbed in said scrubbing tower, into hydrogen gas and carbon dioxide by catalytically reacting carbon monoxide with steam;

an absorption tower for absorbing and separating carbon dioxide in the gas after said shift reaction by bringing carbon dioxide into contact with alkaline absorption liquid;

a shift reactor packed with a methanation catalyst for catalytically reacting the residual carbon dioxide and carbon monoxide in the gas after the carbon dioxide absorption with hydrogen to convert carbon dioxide and carbon monoxide into methane; and

an alloy accommodating container packed with a hydrogen-absorbing alloy for dehumidifying the gas after the methanation, and then separating methane, nitrogen and argon in the gas and purifying the hydrogen gas.

20. A hydrogen production apparatus by gasification of combustibles according to claim 19, wherein a methane adsorption tower is provided for adsorbing and recovering methane from a vent gas discharged from said alloy accommodating container and the recovered methane gas is returned to said gasification furnace where methane is converted by steam reforming reaction into hydrogen and carbon monoxide.

21. A power generation system by gasification of combustibles, wherein the hydrogen gas produced in the apparatus according to claim 19 or 20 is supplied as a fuel gas to an anode of a fuel cell and an anode vent gas in said fuel cell is supplied to said anode to be circulated and utilized.

22. A power generation system by gasification of combustibles according to claim 21, wherein a cathode vent gas in said fuel cell is sent to said gasification furnace for use as a gasifying agent and/or a fluidizing gas for combustibles.

23. A power generation system by gasification of combustibles according to claim 21 or 22, wherein exhaust heat recovered by the cooling of said fuel cell is utilized as a heat source for hydrogen desorption in said hydrogen-absorbing alloy according to claim 19.

24. A power generation system by gasification of combustibles according to claim 21, 22 or 23, wherein said fuel cell comprises a proton exchange membrane fuel cell or a phosphoric acid fuel cell.

25. A fuel cell power generation method by gasification of combustibles, said fuel cell power generation method comprising a gasification step for gasifying combustibles, a gas processing step for refining the gas produced in said gasification step to produce a fuel gas, and a fuel cell power generation step, said gas processing step comprising:

a gas scrubbing step for absorbing and removing dust and a trace amount of acid gases such as hydrogen chloride and hydrogen sulfide in the produced gas obtained in said gasification step by bringing the produced gas into contact with water or alkaline solution;

a shift reaction step for converting carbon monoxide in the gas after said scrubbing step into hydrogen gas and carbon dioxide by catalytically reacting carbon monoxide with steam, after further adsorbing and removing the acid gases in the gas after said scrubbing step;

a selective oxidation step for selectively oxidizing the residual carbon monoxide in the gas after said shift reaction by catalytically reacting the residual carbon monoxide with an oxygen-containing gas; and

a carbon dioxide chemical absorption step for absorbing and separating carbon dioxide in the gas after said selective oxidation by bringing the gas into contact with alkaline absorption solution;

wherein said fuel cell power generation step generates electricity by supplying, as a fuel gas, the hydrogen-containing gas obtained in said carbon dioxide chemical absorption step to an anode of a fuel cell stack while supplying, as an oxidizing agent gas, an oxygen-containing gas to a cathode of said fuel cell stack.

26. A fuel cell power generation method by gasification of combustibles according to claim 25, wherein a membrane separation step is provided, and an anode vent gas discharged from said fuel cell power generation step is introduced into said membrane separation step to allow hydrogen to selectively pass through the membrane and the permeated gas is returned to said shift reaction step.

27. A fuel cell power generation method by gasification of combustibles according to claim 25, wherein a cathode vent gas discharged from said fuel cell stack is sent to said gasification step for use as a gasifying agent and/or a fluidizing gas for combustibles.

**28.** A fuel cell power generation method by gasification of combustibles according to claim 25, 26 or 27, wherein said fuel cell comprises a proton exchange membrane fuel cell or a phosphoric acid fuel cell.

**29.** A fuel cell power generation method by gasification of combustibles, said fuel cell power generation method comprising a gasification step for gasifying combustibles, a gas processing step for refining the gas produced in said gasification step to produce a fuel gas, and a fuel cell power generation step, said gas processing step comprising:

a gas scrubbing step for absorbing and removing dust and a trace amount of acid gases such as hydrogen chloride and hydrogen sulfide in the produced gas obtained in said gasification step by bringing the produced gas into contact with water or alkaline solution;

a carbon dioxide chemical absorption step for absorbing and separating carbon dioxide in the gas after said scrubbing step by bringing the gas into contact with alkaline absorption solution;

a shift reaction step for converting carbon monoxide in the gas into hydrogen gas and carbon dioxide by catalytically reacting carbon monoxide with steam, after further adsorbing and removing the acid gases in the gas after said absorbing and separating; and

a selective oxidation step for selectively oxidizing the residual carbon monoxide in the gas after said shift reaction by catalytically reacting the residual carbon monoxide with an oxygen-containing gas;

wherein said fuel cell power generation step generates electricity by supplying, as a fuel gas, the hydrogen-containing gas obtained in said selective oxidation step to an anode of a fuel cell stack while supplying, as an oxidizing agent gas, an oxygen-containing gas to a cathode of said fuel cell stack.

**30.** A fuel cell power generation method by gasification of combustibles according to claim 29, wherein a membrane separation step is provided, and an anode vent gas discharged from said fuel cell power generation step is introduced into said membrane separation step to allow hydrogen to selectively pass through the membrane and the permeated gas is returned to said carbon dioxide chemical absorption step.

**31.** A fuel cell power generation method by gasification of combustibles according to claim 29, wherein a cathode vent gas discharged from said fuel cell stack is sent to said gasification step for use as a gasifying agent and/or a fluidizing gas for combustibles.

**32.** A fuel cell power generation method by gasification of combustibles according to claim 29, 30 or 31, wherein said fuel cell comprises a proton exchange membrane fuel cell or a phosphoric acid fuel cell.

**33.** A fuel cell power generation system by gasification of combustibles, said system comprising a gasification furnace for gasifying combustibles, a gas processing apparatus for refining the gas produced in said gasification furnace to produce a fuel gas, and a fuel cell, said gas processing apparatus comprising:

a scrubbing tower for absorbing and removing dust and a trace amount of acid gases such as hydrogen chloride and hydrogen sulfide in the produced gas obtained in said gasification furnace by bringing the produced gas into contact with water or alkaline solution;

a shift reactor for converting carbon monoxide in the gas after said scrubbing step into hydrogen gas and carbon dioxide by catalytically reacting carbon monoxide with steam, after further adsorbing and removing the acid gases in the gas after said scrubbing step;

a selective oxidation reactor for selectively oxidizing the residual carbon monoxide in the gas after said shift reaction by catalytically reacting the residual carbon monoxide with an oxygen-containing gas; and

an absorption tower for absorbing and separating carbon dioxide in the gas after said selective oxidation by bringing the gas into contact with alkaline absorption solution;

wherein said fuel cell generates electricity by supplying, as a fuel gas, the hydrogen-containing gas obtained in said absorption tower to an anode while supplying, as an oxidizing agent gas, an oxygen-containing gas to a cathode.

**34.** A fuel cell power generation system by gasification of combustibles according to claim 33, wherein a separation membrane is provided, and an anode vent gas discharged from said fuel cell is introduced into said separation membrane to allow hydrogen to selectively pass through the membrane and the permeated gas is returned to said shift reactor.

**35.** A fuel cell power generation system by gasification of combustibles according to claim 33, wherein a cathode vent gas discharged from said fuel cell stack is sent to said gasification furnace for use as a gasifying agent and/or a fluidizing gas for combustibles.

**36.** A fuel cell power generation system by gasification of combustibles according to claim 33, 34 or 35, wherein said fuel cell comprises a proton exchange membrane fuel cell or a phosphoric acid fuel cell.

**37.** A fuel cell power generation system by gasification of combustibles, said fuel cell power generation system comprising a gasification furnace for gasifying combustibles, a gas processing apparatus for refining the gas produced in said gasification furnace to produce a fuel gas, and a fuel cell, said gas processing apparatus comprising:

a scrubbing tower for absorbing and removing dust and a trace amount of acid gases such as hydrogen chloride and hydrogen sulfide in the produced gas obtained in said gasification furnace by bringing the produced gas into contact with water or alkaline solution;

an absorption tower for absorbing and separating carbon dioxide in the gas after said scrubbing by bringing the gas into contact with alkaline absorption solution;

a shift reactor for converting carbon monoxide in the gas into hydrogen gas and carbon dioxide by catalytically reacting carbon monoxide with steam, after further adsorbing and removing the acid gases in the gas after said absorbing and separating; and

a selective oxidation reactor for selectively oxidizing the residual carbon monoxide in the gas after said shift reaction by catalytically reacting the residual carbon monoxide with an oxygen-containing gas;

wherein said fuel cell generates electricity by supplying, as a fuel gas, the hydrogen-containing gas obtained in said selective oxidation reactor to an anode while supplying, as an oxidizing agent gas, an oxygen-containing gas to a cathode.

**38.** A fuel cell power generation system by gasification of combustibles according to claim 37, wherein a separation membrane is provided, and an anode vent gas discharged from said fuel cell is introduced into said separation membrane to allow hydrogen to selectively pass through the membrane and the permeated gas is returned to said absorption tower.

**39.** A fuel cell power generation system by gasification of combustibles according to claim 37, wherein a cathode vent gas discharged from said fuel cell stack is sent to said gasification furnace for use as a gasifying agent and/or a fluidizing gas for combustibles.

**40.** A fuel cell power generation system by gasification of combustibles according to claim 37, 38 or 39, wherein said fuel cell comprises a proton exchange membrane fuel cell or a phosphoric acid fuel cell.

*F I G. 1*

EP 1 207 132 A1

# F I G. 2

EP 1 207 132 A1

# F I G. 3

# F I G. 4

gasification step 1

scrubbing step 2

shift reaction step 3

carbon dioxide chemical absorption step 4

methanation step 5

hydrogen purifying step 6

methane adsorption step 7

# F I G. 5

scrubbing step 2

shift reaction step 3

carbon dioxide chemical absorption step 4

methanation step 5

hydrogen purifying step 6

EP 1 207 132 A1

*F I G. 6*

EP 1 207 132 A1

# F I G. 7

scrubbing step 2

shift reaction step 3

carbon dioxide chemical absorption step 4

methanation step 5

methane adsorption step 7

EP 1 207 132 A1

F I G. 8

201

a

low-temperature
gasification
furnace

202

$O_2$

incombustibles

produced gas (b)

dust collector

203

ash and alkali
metal salts

F I G. 9

FIG. 10

oxygen
steam
produced gas (b)

201

dust collector
203

low-temperature
gasification furnace
202

radiation boiler

219

a

high-temperature
gasification furnace
215

O₂

salts

incombustibles

molten slag 226

EP 1 207 132 A1

36

F I G . 1 1

## FIG. 12

~ a
combustibles

~ 101
gasification step

b
produced gas

102
scrubbing step

103
shift reaction step

104
selective oxidation step

011
carbon dioxide

105
carbon dioxide chemical absorption step

c
hydrogen-containing gas

106
fuel cell power generation step

051
oxygen-containing gas

021
anode vent gas

061
cathode vent gas

031
permeated gas

107
membrane separation step

041
membrane separation vent gas

## F I G. 1 3

gasification step 101

scrubbing step 102

shift reaction step 103

selective oxidation step 104

carbon dioxide chemical absorption step 105

fuel cell power generation step 106

membrane separation step 107

EP 1 207 132 A1

F I G. 1 4

EP 1 207 132 A1

<div align="center">

**INTERNATIONAL SEARCH REPORT**

</div>

| International application No. |
|---|
| PCT/JP00/04589 |

| A. CLASSIFICATION OF SUBJECT MATTER |
|---|
| Int.Cl⁷ C01B3/02, C01B3/50, C10K3/00, C10J3/00, H01M8/06, H01M8/08, H01M8/10, H01M8/04 |

According to International Patent Classification (IPC) or to both national classification and IPC

| B. FIELDS SEARCHED |
|---|
| Minimum documentation searched (classification system followed by classification symbols) |
| Int.Cl⁷ C01B3/02, C01B3/50, B01D53/14, C10K3/04, C10L3/00, C10J3/00, H01M8/06, H01M8/08, H01M8/10, H01M8/04, C10K3/00 |

Documentation searched other than minimum documentation to the extent that such documents are included in the fields searched
Jitsuyo Shinan Koho 1926-1996 Toroku Jitsuyo Shinan Koho 1994-2000
Kokai Jitsuyo Shinan Koho 1971-2000 Jitsuyo Shinan Toroku Koho 1969-2000

Electronic data base consulted during the international search (name of data base and, where practicable, search terms used)
WPI/L

| C. DOCUMENTS CONSIDERED TO BE RELEVANT | | |
|---|---|---|
| Category* | Citation of document, with indication, where appropriate, of the relevant passages | Relevant to claim No. |
| Y | EP, 803562, A1 (EBARA CORPORATION), 29 October, 1997 (29.10.97) & JP, 10-67992, A & WO, 98/47985, A1 & US, 5900224, A & EP, 979262, A1 & US, 606355, A & US, 5980858, A | 1-40 |
| X Y | JP, 56-149301, A (Harudooru Topusaa AS), 19 November, 1981 (19.11.81) & FR, 2478615, A & DE, 3111030, A | 1 2-24 |
| Y | JP, 6-283189, A (Toshiba Corporation), 07 October, 1994 (07.10.94) (Family: none) | 1-24 |
| Y | US, 5612012, A (NGK Insulators, LTD), 18 March, 1997 (18.03.97) & JP, 7-330304, A | 1-40 |
| X Y | JP, 59-195502, A (TOYO ENGINEERING CORPORATION), 06 November, 1984 (06.11.84) (Family: none) | 1 2-24 |
| Y | JP, 9-266005, A (Toshiba Corporation), 07 October, 1997 (07.10.97) (Family: none) | 25-40 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 October, 2000 (02.10.00) | 10 October, 2000 (10.10.00) |

| Name and mailing address of the ISA/ Japanese Patent Office | Authorized officer |
|---|---|
| Facsimile No. | Telephone No. |

Form PCT/ISA/210 (second sheet) (July 1992)

## INTERNATIONAL SEARCH REPORT

| International application No. |
|---|
| PCT/JP00/04589 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP, 11-176462, A (Tokyo Gas K.K.),<br>02 July, 1999 (02.07.99)   (Family: none) | 13-24 |
| Y | JP, 60-35730, U (Mitsubishi Heavy Industries, Ltd.),<br>12 March, 1985 (12.03.85)   (Family: none) | 13-24 |
| Y | JP, 62-281275, A (Toshiba Corporation),<br>07 December, 1987 (07.12.87)   (Family: none) | 9,11,15,16,<br>21,22,26,27,30<br>,31,34,35,38,<br>39 |
| Y | JP, 62-170171, A (Hitachi, Ltd.),<br>27 July, 1987 (27.07.87)   (Family: none) | 9,11,15,16,21,<br>22,27,30<br>31,34,35,38,39 |
| Y | JP, 8-250144, A (Toshiba Corporation),<br>27 September, 1996 (27.09.96)   (Family: none) | 10 |

Form PCT/ISA/210 (continuation of second sheet) (July 1992)